(19) Europäisches Patentamt
European Patent Office
Office européen des brevets

(11) EP 3 374 421 B1

(12) EUROPÄISCHE PATENTSCHRIFT

(45) Veröffentlichungstag und Bekanntmachung des Hinweises auf die Patenterteilung:
**24.01.2024 Patentblatt 2024/04**

(21) Anmeldenummer: **16794590.6**

(22) Anmeldetag: **09.11.2016**

(51) Internationale Patentklassifikation (IPC):
***C08J 11/28** (2006.01)* ***C08G 8/10** (2006.01)*
***C08L 61/06** (2006.01)*

(52) Gemeinsame Patentklassifikation (CPC):
**C08J 11/28; C08G 8/10; C08G 8/32;** C08J 2361/06; Y02P 20/582; Y02W 30/62

(86) Internationale Anmeldenummer:
**PCT/EP2016/077082**

(87) Internationale Veröffentlichungsnummer:
**WO 2017/081061 (18.05.2017 Gazette 2017/20)**

(54) **VERFAHREN ZUM RECYCLING VON PHENOLHARZHALTIGEN MATERIALIEN, INSBESONDERE PHENOLHARZBASIERTEN FASERVERBUNDKUNSTSTOFFEN**

METHOD OF RECYCLING PHENOL RESIN-CONTAINING MATERIALS, ESPECIALLY PHENOL RESIN-BASED FIBRE COMPOSITE MATERIALS

PROCÉDÉ DE RECYCLAGE DE MATIÈRES CONTENANT DE LA RÉSINE PHÉNOLIQUE, EN PARTICULIER DE MATIÈRES SYNTHÉTIQUES COMPOSITES FIBREUSES À BASE DE RÉSINE PHÉNOLIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.11.2015 DE 102015119680**
**11.03.2016 DE 102016104518**

(43) Veröffentlichungstag der Anmeldung:
**19.09.2018 Patentblatt 2018/38**

(73) Patentinhaber: **Fraunhofer-Gesellschaft zur Förderung der angewandten Forschung e.V.**
**80686 München (DE)**

(72) Erfinder:
- **SÖTHJE, Dominik**
  **90439 Nürnberg (DE)**
- **DREYER, Christian**
  **55758 Niederwörresbach (DE)**
- **BAUER, Monika**
  **15712 Königs-Wusterhausen (DE)**
- **LANG, Jürgen**
  **16356 Ahrendsfelde (DE)**

(74) Vertreter: **Strehl Schübel-Hopf & Partner**
**Maximilianstrasse 54**
**80538 München (DE)**

(56) Entgegenhaltungen:
**WO-A1-94/09062 DD-A1- 236 324**
**DD-A1- 266 574**

- **DATABASE WPI Week 198345 Thomson Scientific, London, GB; AN 1983-810871 XP002765812, & JP S58 164613 A (SHIN KOBE ELECTRIC MACHINERY) 29. September 1983 (1983-09-29)**

EP 3 374 421 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zum Abbau von phenolharzhaltigen Materialien, insbesondere von Phenolharzen, Phenolharz-Prepolymeren, phenolharzhaltigen Kunststoffen und phenolharzbasierten Faserverbundkunststoffen. Sie betrifft des Weiteren spezielle phenolharzhaltige Materialien, mit denen ein solcher Abbau besonders gut gelingt. Dabei kann die Abbaubarkeit teils durch die Härtungsbedingungen bei der Herstellung dieser Materialien, teils durch ihre chemische Zusammensetzung günstig beeinflusst werden. Die Erfindung betrifft schließlich ein Recycling-Verfahren, bei dem das Abbauprodukt des erfindungsgemäßen Verfahrens als Komponente zur Herstellung neuer Polymere dient.

Faserverbundkunststoffe bilden eine synergetische Kombination der Eigenschaften ihrer Einzelkomponenten ab: Die der verstärkenden, kraftaufnehmenden Fasern und die der polymeren, formgebenden Matrix, welche auch als Schutz vor äußeren Einflüssen dient. Besonders herausragend sind die hohe Festigkeit und Steifigkeit der Faserverbundkunststoffe bei vergleichsweise geringer Dichte, was diese Werkstoffklasse für den Leichtbau, beispielsweise in der Luftfahrt- und Automobilindustrie oder für die Windkraftanlagenherstellung, geradezu prädestiniert. Zudem können faserverstärkte Kunststoffe in nahezu jeder Geometrie hergestellt werden.

Phenolharze zeichnen sich vor allem durch ihre hohe intrinsische Flammfestigkeit und ihre hohe Wärmeformbeständigkeit aus. Ferner zeigen sie eine hohe Lösemittelbeständigkeit und eine gute Beständigkeit gegenüber leicht sauren oder basischen Chemikalien. Diese Eigenschaften machen diese Klasse der Duromere insbesondere als formgebende Matrix für Faserverbundkunststoffe in der Luftfahrt, für Schutzhelme, Reibbeläge sowie für Fußbodenbeläge oder faserverstärkte Platten interessant.

Grundlegend gibt es zwei Klassen von Phenolharzen, die bei der Reaktion von Phenol mit Formaldehyd entstehen können: Novolake und Resole. Die beiden grundsätzlichen Wege der Reaktion zwischen Phenol und Formaldehyd (zu Resolen und Novolaken) sind schematisch im nachstehenden Reaktionsschema gezeigt. Neben Phenol werden häufig auch o-, p-, und m-Kresol als Edukt für die Synthese der Phenol-Formaldehydharze eingesetzt. Neben Formaldehyd können beispielsweise auch Acetaldehyd, Propionaldehyd, n-Butyraldehyd, iso-Butyraldehyd, Glyoxal und Furfural eingesetzt werden.

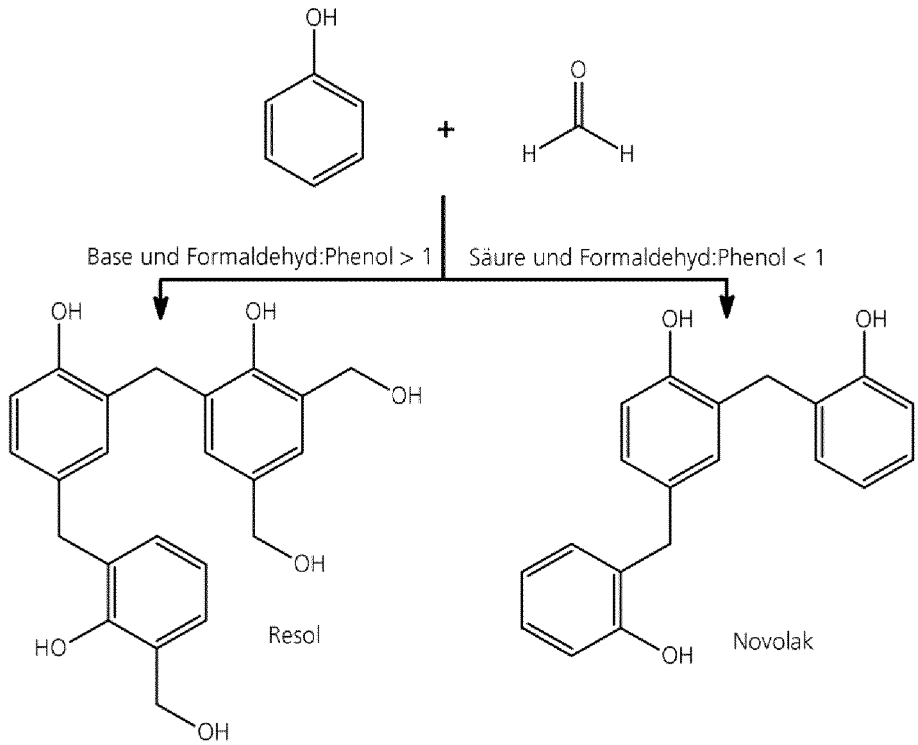


Bei der Herstellung der Phenolharze entstehen grundsätzlich immer Methylen- und Dimethylenetherbrücken, wie nachstehend gezeigt. Der Anteil der jeweiligen Brücken ist abhängig von der Zusammensetzung des Harzes und den Reaktionsbedingungen bei der Herstellung und Härtung.

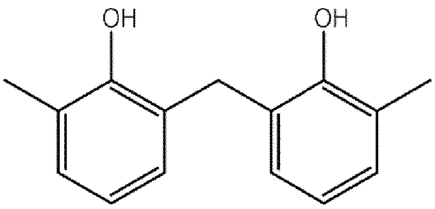

Methylenbrücken

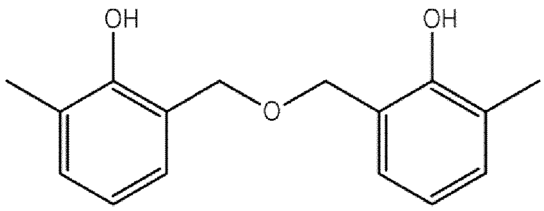

Dimethylenetherbrücken

Wird Phenol mit einem Überschuss Formaldehyd unter basischen Bedingungen umgesetzt, so werden zunächst Resole (A-Zustand), bei Weiterreaktion dann Resitole (B-Zustand) und schließlich Resite (C-Zustand) erhalten. Resole sind selbsthärtend und weisen Methylen- und Dimethylenetherbrücken auf.

Werden Phenole mit einem Unterschuss Formaldehyd unter Säurekatalyse umgesetzt, so werden Novolake erhalten. Diese sind nicht selbsthärtend und müssen nachträglich durch den Zusatz von Härtern, insbesondere polyfunktionellen Aminen wie beispielsweise Hexamethylentetramin (HEXA, Urotropin), ausgehärtet werden. Da erst die Zugabe eines zusätzlichen Härters die vollständige Netzwerkbildung bewirken kann, besitzen Novolakprepolymere eine bessere Lagerstabilität als Resol-Prepolymere. Ein bei der Härtung mit Hexamethylentetramin entstehendes Netzwerk ist nachfolgend schematisch gezeigt.

Aufgrund der Härtung mit Hexamethylentetramin kommt es neben den Methylen- und Dimethylenetherbrücken weiterhin zur Ausbildung von Aminodimethylenbrücken.

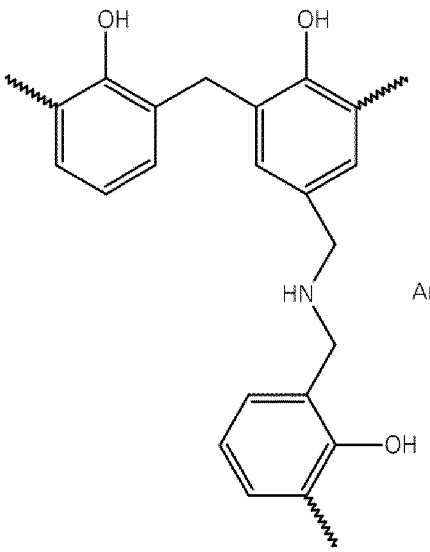

Aminodimethylenbrücken

Nach derzeitigem Stand der Technik können Phenolharze oder deren Erzeugnisse, insbesondere hieraus hergestellte Faserverbundkunststoffe, nur sehr energie- und/oder zeitaufwendig und somit kostenintensiv recycelt werden. Phenolharze lassen sich als dreidimensional vernetzte Kunststoffe nicht mehr aufschmelzen oder auflösen und so keinem einfachen, den Thermoplasten oder Metallen analogen Recyclingverfahren unterziehen. Die in der Vergangenheit gängige Option, Verbundwerkstoffe auf einer oberirdischen Deponie billig, einfach und ohne Vorbehandlung zu entsorgen ist aufgrund der zum 01.06.2005 in Kraft getretenen Änderung zur Siedlungsabfallentsorgung und der Verordnung über Deponien und Langzeitlager, Deponieverordnung (DepV), vom 02.05.2013 nicht länger möglich. Aufgrund der im §5 der 17. BlmSchV, Verordnung über die Verbrennung und die Mitverbrennung von Abfällen, vom 02.05.2013 definierten Auflagen wird eine Verbrennung solcher Materialien besonders erschwert. Die vorgegebenen Grenzwerte werden oftmals nicht erreicht, so dass nach aktuellem Stand meist nur die Entsorgung in Untertagedeponien bleibt. Dies stellt allerdings keine langfristig akzeptable Lösung dar. Daher ist die bisher am häufigsten zum Einsatz kommende stoffliche Verwertung für Duromere und deren Erzeugnisse das Zerkleinern und die anschließende Verwendung als Füllmaterial. Hochwertiges stoffliches Recycling ist jedoch nur dann gewährleistet, wenn aus den Sekundärwerkstoffen wieder hochwertige Produkte hergestellt werden können.

Bei den aus der Literatur bekannten Verfahren zum chemischen Recycling gehärteter Phenolharze ist eine oftmals sehr aggressive Behandlung unter sehr hohen Temperaturen und hohen Drücken notwendig. Des Weiteren sind die hierfür benötigten Apparaturen meist sehr aufwändig (Autoklav mit Rührwerk). Die aus der Literatur bekannten

Verfahren zum Recycling der beiden Phenolharztypen, der Resole und der Novolake, sind die folgenden:
Resole lassen sich mittels Hydrierung zersetzen, siehe EP 1 107 938 B1 (Gentzkow et al.). Die Zersetzung erfolgt dabei mit Tetralin als Wasserstoffdonor im Bombenrohr bei Temperaturen zwischen 300°C und 350°C. Die Prozesszeit beträgt etwa 5 h. Bei 330°C konnte die Arbeitsgruppe um Gentzkow das Phenolharz in tetralinlösliche Produkte umsetzten, die signifikante Mengen an Phenolen sowie verschiedenen (o-, m-, und p-) Kresolen enthielten.

Novolake lassen sich mittels Hydrolyse (Pilato, L.: Phenolic Resins: A Century of Progress, Springer Verlag, Berlin, Heidelberg, 2010, ISBN: 978-3-642-04713-8) oder Methanolyse (Ozaki, J.; Djaja, S. K. I.; Oya, A.: Chemical Recycling of Phenol Resin by Supercritical Methanol, Industrial & Engineering Chemistry Research, 39, 2000, Seite 245-249) zersetzen.

Bei der Methanolyse erfolgt die Zersetzung mit überkritischem Methanol in einem Autoklaven bei 10 MPa unter Stickstoff bei Temperaturen von bis zu 420°C. Mittels Gaschromatographie konnten Phenol und methylierte Phenolderivate in den Abbauprodukten nachgewiesen werden. Bei der Hydrolyse erfolgt die Zersetzung mit überkritischem Wasser und Natriumhydroxid als Katalysator. Ein maximal möglicher Abbaugrad von 70% wird bei einer Reaktionstemperatur von 480°C erzielt. Als Abbauprodukte entstehen sowohl Phenolmonomere als auch oligomere Phenolharzreste.

Zur Zersetzung von Phenolharzen (Resole und Novolake) mit überkritischem Wasser wurden von Tagaya et al. (Tagaya, H.; Suzuki, Y.; Komuro, N.; Kadokawa, J.: Reactions of model compounds of phenol resin in sub- and supercritical water under an argon atmosphere, Journal Material Cycles and Waste Management, 3 (Nr. 1), 2001, S. 32-37) Versuche an Modellverbindungen durchgeführt. Der Fokus dieser Arbeiten lag auf der Aufklärung der Zersetzungsmechanismen. Dabei fand ein mit Argon befülltes 10 ml Bombenrohr Verwendung. Die Reaktionstemperatur lag zwischen 250°C und 430°C bei einer Reaktionszeit zwischen 0,25 h und 1,5 h. Mittels GC/MS mit FID-Detektor wurden die Reaktionsprodukte analysiert. Es wurde des Weiteren festgestellt, dass, abhängig vom verwendeten Phenolharztyp Tetralin oder Alkalisalze als Katalysator fungieren können. Ebenso beschäftigte sich die Arbeitsgruppe um Goto mit der Zersetzung von Phenolharzen mittels überkritischen Wassers und Alkoholen (Goto, M.; Sasaki, M.; Hirose, T.: Reactions of polymers in supercritical fluids for chemical recycling of waste plastics, Journal of Materials Science, 41 (Nr. 5), 2006, S. 1509-1515). Bei diesen Arbeiten ging es vor allem um die entstehenden Produkte in Abhängigkeit der Reaktionsführung.

Ferner lassen sich nach Horiuchi und Fukuda ausgehärtete Phenolharze (Resole und Novolake) mittels eines im Verhältnis zum Phenolharz hohen Überschusses an Phenol zersetzen (Pilato, L.: Phenolic Resins: A Century of Progress, Springer Verlag, Berlin, Heidelberg, 2010, ISBN: 978-3-642-04713-8). Wird ein ausgehärtetes Phenolharz mit einem großen Überschuss an Phenol und einer kleinen Menge sauren Katalysator (z. B. p-Toluolsulfonsäure) gekocht, wandelt sich das gehärtete Harz in niedermolekulare phenollösliche Verbindungen um. Die Reaktionsdauer beträgt 3 h bis 5 h. Bei dieser Methode ist durch nachfolgende Zugabe von Formaldehyd und Hexamethylentetramin die erneute Bildung eines Novolakes mit Eigenschaften, die denen des Ausgangsharzes vergleichbar sind, möglich. Allerdings lässt sich das als Zersetzungsreagenz verwendete Phenol nur schwer von den Abbauprodukten abtrennen.

Aufgrund der Brisanz der Recyclings-Thematik und im Hinblick auf ein ressourcenschonendes Wirtschaften wären Wiederverwertungskonzepte wünschenswert, mit denen phenolharzhaltige Materialien einfach und effizient einem Recycling unterworfen werden könnten. Dabei wäre insbesondere schon die Herstellung der genannten Materialien nach Möglichkeit dahingehend zu beeinflussen, dass ein solches Recycling mit guten Ausbeuten gelingt.

Die Erfinder der vorliegenden Erfindung haben sich daher die Aufgabe gestellt, ein Verfahren aufzufinden, bei dem phenolharzhaltige Materialien chemisch so zersetzt werden können, dass wiederverwendbare Produkte, vorzugsweise monomere oder oligomere Einheiten, erhalten werden können, die zum Aufbau neuer Kunststoffe eingesetzt werden können. Die Aufgabe umfasst auch die Wiedergewinnung von in Faserverbundkunststoffen enthaltenen Verstärkungsfasern, ohne dass es dabei zu einer signifikanten Reduzierung von deren mechanischen Eigenschaften kommt. Und schließlich sollen spezifische phenolharzhaltige Materialien bereitgestellt werden, die sich besonders leicht zersetzen und ggf. wiederverwenden lassen.

Diese Aufgabe wird mit einem Verfahren gelöst, bei dem das phenolharzhaltige Material einer Aminolyse, also der Umsetzung mit einem Amin, unterworfen wird. Die Erfinder der vorliegenden Erfindung konnten dabei feststellen, dass bei dieser Aminolyse, anders als bei den bekannten Verfahren mit Methanol und Wasser, keine überkritischen Bedingungen benötigt werden. Im Falle eines Faserverbundkunststoffes mit Phenolharzmatrix werden dabei fast alle üblicherweise verwendeten Verstärkungsfasern, beispielsweise Carbon-, Glas-, Aramid- und Naturfasern, nicht geschädigt. In Einzelfällen, in denen gegenüber stark basischen Aminen empfindliche Fasern verwendet wurden, ist eine spezielle Wahl des für die Aminolyse vorgesehenen Amins möglich.

Unter dem Ausdruck "phenolharzhaltige Materialien" sind erfindungsgemäß alle solchen Materialien zu verstehen, die entweder aus Phenolharz (in der Regel entweder durch Selbsthärtung oder durch Zusatz eines Härters gehärtet, dabei vorzugsweise vollständig ausgehärtet) bestehen oder ein solches Phenolharz als Komponente enthalten, beispielsweise, aber nicht ausschließlich, in Form einer Matrix (z.B. für Faserverbundkunststoffe). Der Ausdruck umfasst auch solche Materialien, die Phenolharz als unerwünschte Verunreinigung enthalten, beispielsweise Werkzeuge, die bei der Herstellung der Phenolharze verwendet werden.

Bevorzugt ist der Ausdruck "phenolharzhaltige Materialien" erfindungsgemäß so zu verstehen, dass die phenolharzhaltigen Materialien keine Benzoxazinharze, weiter bevorzugt auch keine Benzoxazinharz-Prepolymere und benzoxazinharzhaltigen Kunststoffe enthalten.

Wie im Rahmen von an der Fraunhofer-Einrichtung für Polymermaterialien und Composite PYCO durchgeführten Arbeiten festgestellt wurde, ist eine starke Abhängigkeit der Abbaubarkeit von der chemischen Struktur der verwendeten Phenolharze festzustellen: Sind viele Dimethylenetherbrücken oder Aminodiethylenbrücken im Phenolharz enthalten, so lässt sich mit dem erfindungsgemäßen Verfahren ein wesentlich größerer Anteil des Harzes zersetzen. Dies ermöglicht in vielen Fällen eine Beeinflussung der Fähigkeit von phenolharzhaltigen Materialien, sich unter aminolytischen Bedingungen zersetzen zu lassen, schon über die Wahl der Härtungsbedingungen.

Unabhängig von der konkreten chemischen Struktur kann die Matrix von phenolharzhaltigen Faserverbundkunststoffen mit dem erfindungsgemäßen Verfahren immer so weit abgebaut werden, dass neben der zersetzten Harzmatrix ein von der Harzmatrix komplett befreites oder teilbefreites, jedoch immer flexibles und wiederverwertbares Fasermaterial zurück gewonnen wird.

Der Dimethylenetherbrücken-Anteil hängt neben der Zusammensetzung des Phenolharzes und dem verwendeten Katalysator auch stark von der Härtungstemperatur und der Härtungsdauer ab, bei denen das phenolharzhaltige Material erzeugt wurde. Werden Phenolharze bei niedrigen Temperaturen und/oder nur kurz gehärtet, ist ein signifikant höherer Anteil an Dimethylenetherbrücken auszumachen als bei längeren Härtungszeiten oder höheren Temperaturen. Dies ist korreliert mit einer besseren chemischen Abbaubarkeit. Eine Aussage über den relativen Anteil an Dimethylenetherbrücken kann mittels Elementaranalyse gemacht werden. Der Sauerstoffanteil kann entweder direkt oder indirekt bestimmt werden, wobei im zweiten Fall zunächst alle anderen im Polymer enthaltenen Elemente quantifiziert werden und der Rest dem Sauerstoffanteil entspricht. Sind viele Dimethylenetherbrücken vorhanden, ist der Sauerstoffanteil entsprechend groß. Sind wenige Dimethylenetherbrücken vorhanden, ist der Sauerstoffanteil entsprechend geringer.

Der Anteil an Aminodimethylenbrücken im Novolakharz ist vom Anteil an eingesetztem Aminhärter (z.B. Hexamethylentetramin) abhängig. Bei hohen Härter-Anteilen ist im resultierenden Polymer auch ein höherer Stickstoffanteil und somit ein größerer Anteil an Aminodiethylenbrücken vorhanden. Die Bestimmung des Stickstoffanteils kann direkt mittels Elementaranalyse erfolgen.

Wird bereits bei der Herstellung von Phenolharzen darauf geachtet, dass sie eine für den späteren Abbau günstige Zusammensetzung, d. h. einen hohen Anteil an Dimethylenether- und/oder Aminodimethylenbrücken, besitzen und bei einer relativ niedrigen Härtungstemperatur gehärtet werden, so kann die chemische Abbaubarkeit und somit die spätere Recyclingfähigkeit des daraus hergestellten Produkts bereits im Vorfeld stark im gewünschten Sinne beeinflusst werden. Dennoch lassen sich nicht alle Novolakharze vollständig abbauen. Doch gelingt in überraschender Weise der Abbau von Novolakharzen weitestgehend oder sogar vollständig, die unter Einsatz von insbesondere einen hohen Anteil an ungesättigten Fettsäuren enthaltenden Triglyceriden, z.B. Holzöl (Tungöl), hergestellt und mit einem hohen Anteil an Amin gehärtet wurden. Holzöl ist ein Gemisch, das hauptsächlich aus Triglyceriden besteht. Den größten Anteil der Fettsäuren der Triglyceride macht die dreifach ungesättigte Fettsäure α-Elaeostearinsäure aus. Weiterhin sind Ölsäurereste (etwa 15%), Palmitinsäurereste (ca. 4%) und Stearinsäurereste (ca. 1,3%) -jeweils als Glycerinester gebunden - enthalten.

Eine Aminolysereaktion an Phenolharzen kann dem Grunde nach durch ein beliebiges, unter den Abbaubedingungen gegebenenfalls gasförmiges, vorzugsweise jedoch flüssiges oder gelöstes Amin eingeleitet werden. Je nach Konstitution des Phenolharzes und ggf. der Verstärkungsfasern sind dies insbesondere Ammoniak, Hydrazin, primäre und sekundäre Amine und Hydrazine mit aliphatischen oder aromatischen Resten, die ihrerseits wiederum substituiert sein können. In Frage kommen daher für die Reaktion beliebige primäre Amine von gesättigten oder ungesättigten, linearen, verzweigten oder cyclischen aliphatischen oder aromatischen Kohlenwasserstoffen, die entsprechenden Hydrazine und natürlich Ammoniak und Hydrazin selbst. Die Verzweigung oder Kettenlänge des Kohlenwasserstoffrestes spielt bei der Reaktion nur eine untergeordnete Rolle, solange die Aminofunktion eine ausreichende Reaktivität gegenüber den Phenolharzen aufweist. Der Einsatz hydrophober Kohlenwasserstoffreste (z.B. längerer aliphatischer Ketten, z.B. mit mindestens 5 Kohlenstoffatomen in primären Aminen und α-ω-Diaminen bzw. mindestens 3 Kohlenstoffatomen in α-ω-Aminoalkoholen) kann jedoch bis zu einem gewissen Grad von Vorteil sein.

Die zum Einsatz kommenden primären und sekundären Amine können weitere Substituenten aufweisen, je nach gewünschtem Substitutionsmuster der Reaktionsprodukte. Besonders vorteilhaft ist eine weitere Amino- oder Hydroxylfunktion. Ebenso können andere Substituenten vorhanden sein, wobei darauf zu achten ist, dass diese ggf. nicht nachteilig in das Reaktionsgeschehen eingreifen.

Dementsprechend wird das genannte Verfahren vorzugsweise durch Aminolyse mit einem Aminolysereagenz, ausgewählt unter einem Amin der Formel (1)

$$H_2N\text{-}X \qquad (1)$$

und/oder einem Amin der Formel (2)

Z-NH-X (2)

oder einer Mischung mehrerer der genannten Reagenzien durchgeführt, worin X ausgewählt ist unter -H, -OH, $-NH_2$ und $-NHR^1$ und $R^1$ ein aliphatischer oder aromatischer Kohlenwasserstoffrest mit insbesondere 1 bis 20 C-Atomen ist, der substituiert sein kann. X kann stattdessen auch eine Gruppe $R^2$-Y sein, worin $R^2$ ein zweiwertiger aliphatischer oder aromatischer Kohlenwasserstoffrest mit insbesondere 1 bis 20 C-Atomen ist und Y für einen beliebigen einwertigen Rest steht, insbesondere aber für -H, -OH, $-NH_2$ oder-$NHR^1$.

Z ist ein aliphatischer oder aromatischer Kohlenwasserstoffrest mit vorzugsweise 1 bis 20 C-Atomen, stärker bevorzugt 5 bis 20 C-Atomen im Falle eines aliphatischen Kohlenwasserstoffrests, der substituiert sein kann. Z kann insbesondere auch eine Gruppe $R^3$-A sein, worin $R^3$ ein zweiwertiger aliphatischer oder aromatischer Kohlenwasserstoffrest mit der voranstehend für Z genannten bevorzugten Kettenlänge ist und A für einen beliebigen einwertigen Rest steht, insbesondere aber für-OH, $-NH_2$ oder -NHR1, worin $R^1$ wie zuvor definiert ist.

Die Aminolysereagenzien der vorliegenden Erfindung sind vorzugsweise bei Raumtemperatur oder bei höherer Temperatur flüssig. Sie können ggf. in einem Lösungsmittel gelöst bzw. damit verdünnt vorliegen, z.B. einem Alkohol, ggf. auch in Wasser (vor allem, wenn Ammoniak eingesetzt werden soll), vorzugsweise in einem cyclischen Ether, Alkohol, Chlorkohlenwasserstoff oder N-haltigen Lösungsmittel oder einer Kombination mehrerer solcher Lösungsmittel. Insbesondere kann als Lösungsmittel Tetrahydrofuran, Dimethylsulfoxid, Ethanol, Wasser, Dioxan, Dichlormethan, Chloroform, Dimethylformamid oder N-Methyl-2-pyrrolidon oder eine Mischung von zweien oder mehreren dieser Lösungsmittel eingesetzt werden.

Vorzugsweise werden jedoch (ggf. erwärmte) flüssige Amine ohne zugesetztes Lösungsmittel eingesetzt.

Durch das erfindungsgemäße Verfahren wird es möglich, aus ausgehärteten, phenolharzhaltigen Ausgangsmaterialien niedermolekulare Komponenten zurückzugewinnen. Diese Komponenten besitzen nachweislich freie Amino- und/oder Hydroxylgruppen, weshalb sie sich nach entsprechender Aufarbeitung oder sogar direkt ohne Aufarbeitung als Rohstoff für den Neuaufbau von Polymeren einsetzen lassen. Als mögliches Beispiel für einen solchen Neuaufbau sei vor allem die Herstellung von Phenolharzen genannt, worin die durch die Aminolyse gewonnenen Abbauprodukte z.B. den Ausgangsmaterialien für die gewünschte Phenolharz- (Novolak- oder Resolharz-) Synthese beigegeben werden können und dabei in das neu entstehenden Polymernetzwerk eingebunden werden. Weitere Beispiele sind die Umsetzung mit weiteren, mindestens bifunktionellen oder bifunktionalisierbaren Monomeren, Oligomeren oder Polymeren, die mit Amino- und/oder Hydroxygruppen eine Polyreaktion (Polyaddition oder Polykondensation) eingehen. So können die Recyclingprodukte in direkter Umsetzung mit Isocyanaten zu Polyharnstoffen oder Polyurethanen verarbeitet werden. Auch die Umsetzung mit aktivierten (Meth-)Acrylsäureverbindungen wie Acrylsäurechloriden und -anhydriden ist möglich, wobei in diesem Fall vorzugsweise eine radikalische Vernetzung nachfolgt. Die Recyclingprodukte können ferner mit Cyanaten copolymerisiert oder für die Aushärtung mit Epoxidharzen genutzt werden.

Das erfindungsgemäße Verfahren wird bevorzugt bei Temperaturen von -20°C bis +250°C, insbesondere aber bis hinauf zum Siedepunkt des verwendeten Agens durchgeführt. Wird die Reaktion unter Druck durchgeführt, kann die Temperatur auch über den Siedepunkt (bei Normaldruck) des verwendeten Agens hinaus gesteigert werden. In der Regel ist dies jedoch nicht notwendig. Die Aminolyse kann auch durch die Zufuhr von Mikrowellenenergie unterstützt werden, wobei in der Regel ein zusätzlicher Eintrag von direkter Wärmeenergie durch Erhitzen nicht nötig ist, auch wenn dies nicht ausgeschlossen sein soll. Dabei hängt die Schnelligkeit der Zersetzung in der Regel von der zugeführten Energiemenge (thermisch, durch Mikrowellenbehandlung) ab.

Die Erfinder konnten des Weiteren zeigen, dass nicht nur vollständig von Phenolharzmatrix befreite Gewebe, sondern - mit spezifischen Ausnahmen - auch mit Resten von Phenolharz behaftete Gewebe wiederverwendet werden können. Bauteile, die aus Geweben mit Restharzanhaftungen hergestellt wurden, weisen im Vergleich zu Bauteilen, hergestellt aus neuen oder vollständig von der alten Matrix befreiten Geweben, noch etwa 80% der mechanischen Eigenschaften auf. Damit sind sie für eine Vielzahl von Anwendungen geeignet.

Das erfindungsgemäße Verfahren kann auch zur Reinigung von mit Phenolharzen verschmutzten Werkzeugen genutzt werden.

Die Erfindung wird durch die nachfolgenden Ausführungsbeispiele näher erläutert.

## Ausführungsbeispiele

### A Herstellung der Harze und eingesetzte Messmethoden

Um Versuche zum Recycling von Phenolharzsystemen durchzuführen, kamen sowohl novolakals auch resolbasierte Systeme zum Einsatz. Da aus Phenolharzen nur unter erheblichem Aufwand Reinharzplatten hergestellt werden können, wurden für die Recyclingversuche Glasfaserlaminate mit Phenolharzmatrix gefertigt. Als Faserverstärkung kam ein in der Luftfahrt verwendetes Gewebe mit Atlasbindung zum Einsatz.

Um nach den Zersetzungsversuchen den auf den Fasern verbliebenen Harzanteil zu bestimmen, wurden thermogravimetrische Analysen (TGA) durchgeführt. Hierzu wurden die durch den chemischen Abbau von der Harzmatrix befreiten Gewebe nach Beendigung des Recyclingversuchs aus dem Reaktionsgefäß entnommen und mit Ethanol gewaschen. Die anschließend bei Raumtemperatur getrockneten Gewebe wurden unter Verwendung der TGA bis auf 700°C mit einer Rampe von 10 $K \cdot min^{-1}$ aufgeheizt und der Massenverlust bestimmt; dieser entspricht - unter Vernachlässigung von Oxidationseffekten - dem auf dem Gewebe verbliebenem Harzanteil. Analog wurde das unbehandelte Laminat einer thermogravimetrischen Analyse unterzogen. Der hier ermittelte Massenverlust entspricht dem Harzgehalt des Laminates.

**Figur 1** zeigt exemplarisch drei TGA Kurven: Kurve A zeigt die Werte eines Laminates; Kurve B zeigt die Daten eines mit Harzresten behafteten Gewebes; Kurve C zeigt die Daten eines vollständig von der Matrix befreiten Gewebes.

Aus den mittels TGA ermittelten Werten ergibt sich der Harzabbau $\Delta m$ nach folgender Gleichung (1):

$$\Delta m = 100*\{1-[(A_2-E_2)*E_1]/[(A_1-E_1)*E_2]\} \qquad (1)$$

Mit

$\Delta m$ = prozentualer Abbau des Matrixharzes [Ma-%]
A = Probeneinwaage [g]
E = verbleibende Masse nach TGA-Analyse (Masse des Glasgewebes) [g]
Index 1 = unbehandeltes Laminat
Index 2 = nach Recycling erhaltenes Gewebe

Der Harzabbau gibt an, wieviel Prozent der Harzmatrix chemisch abgebaut wurde.

**B Synthesebeispiele**

B1 Resolimprägnierharz

Es wurde ein Resolimprägnierharz nach folgender Vorschrift synthetisiert:
Zunächst wurden 688,5 g Phenol und 682,6 g einer 37-prozentigen Formaldehydlösung in einem 1,5 l Sulfierkolben mit KPG-Rührer, Thermometer, Kühler und elektrischem Heiznest vorgelegt. Die Heizung wurde eingeschaltet, und zügig wurden 16,1 g einer 28-prozentigen Ammoniaklösung zugetropft. Die Reaktionsmischung wurde auf 70°C erwärmt, nach etwa 3 Minuten stieg die Temperatur auf etwa 72°C an. Innerhalb von 23 min wurde das Gemisch langsam auf Siedetemperatur erwärmt. Siedebeginn war bei einer Reaktionstemperatur von 98°C, dies entsprach auch dem Beginn der Zeitmessung. Innerhalb von 25 min wurden dann 109 g Wasser abdestilliert. Die Siedetemperatur steigerte sich auf 100°C. Folgend wurde die Reaktionsmischung unter Rückfluss erhitzt und nach insgesamt 40 min Reaktionszeit weitere 3,2 g Ammoniak hinzugegeben und in regelmäßigen Abständen die B-Zeit bestimmt:

- nach 1 h 40 min C, B-Zeit (150°C): 5 min 45 sek
- nach 3 h Siedetemp. 98,4°C, B-Zeit (150°C): 14 min 30 sek
- nach 3 h 45 min Siedetemp. 98,1°C, B-Zeit (150°C): 9 min 40 sek
- nach 4 h 10 min Siedetemp. 97,8°C, an der Oberfläche einsetzende Trübung
- nach 4 h 15 min Siedetemp. 97,8°C, B-Zeit (150°C): 7 min 50 sek
- nach 4 h 35 min Siedetemp. 97,9°C, B-Zeit (150°C): 8 min 30 sek, völlig trübe
- nach 5 h Siedetemp. 98,0°C, B-Zeit (150°C): 5 min 45 sek

Nach 5 h 10 min wurde das Heiznest entfernt und der Ansatz mit einem Wasserbad für 5 min auf eine Temperatur von 75°C abgekühlt. Der Ansatz wurde in einen 2 l Rundkolben gegeben und das Kondensationswasser unter Vakuum am Rotationsverdampfer bei einer Temperatur von 75°C abdestilliert. Abschließend wurden dem Phenolharz 80 g Methanol hinzugegeben, das Gemisch in eine Glasflasche überführt und im Kühlschrank gelagert.

Das so synthetisierte Harz wurde zur Herstellung von Laminaten verwendet, an welchen die folgenden Recyclingversuche durchgeführt wurden.

B2 Novolakimprägnierharze

(a) Es wurde ein Novolakimprägnierharz gemäß folgender Vorschrift synthetisiert:
Zunächst wurden 645,0 g Phenol und 2,82 g p-Toluolsulfonsäure-Monohydrat in einem 2,5 l Sulfierkolben mit KPG-Rührer, Thermometer, Kühler und elektrischem Heiznest vorgelegt. Die Mischung wurde erwärmt bis das Phenol geschmolzen und die Säure gelöst war (59°C). Daraufhin hin wurde auf 46°C abgekühlt und 100 g Holzöl (Tungöl) zugewogen. Die Lösung verfärbte sich braun und erwärmte sich leicht. Anschließend wurde die Reaktionsmischung auf 80°C erwärmt und die Temperatur für 40 Minuten gehalten. Innerhalb von vier Minuten wurde das Gemisch im Wasserbad auf 50°C abgekühlt und 7,5 g Hexamethylentetramin zugegeben. Unter Rühren wurde die Mischung innerhalb von 15 Minuten auf 74°C erwärmt. Bei 70°C wurde 532,0 g Formaldehyd zugegeben. Dabei sank die Temperatur auf 47°C und der Ansatz bildete eine klare Lösung. Es wurde fünf Minuten nachgerührt und der pH-Wert kontrolliert (pH = 5,6). Innerhalb von 32 Minuten wurde das Gemisch vorsichtig auf Siedetemperatur gebracht. Siedebeginn war bei einer Reaktionstemperatur von 99,3°C, dies entsprach auch dem Beginn der Reaktionszeitmessung. Nach sieben Minuten trübte sich die Lösung leicht ein. 30 Minuten nach Reaktionsbeginn wurden innerhalb von 15 Minuten 125 g Wasser abdestilliert, dabei wurde die Lösung wieder klar. In regelmäßigen Abständen wurde die B-Zeit bestimmt:

- nach 1 h 20 min, B-Zeit: 8 min 30 sek
- nach 1 h 40 min, B-Zeit: 7 min 50 sek
- nach 1 h 50 min, B-Zeit: 7 min 40 sek
- nach 2 h, B-Zeit: 7 min 5 sek

Nach 2 h 8 min wurde das Heiznest entfernt und der Ansatz mit einem Wasserbad bis auf eine Temperatur von 64°C abgekühlt. Der Mischung wurden 5 g Butanol zugegeben und der Ansatz in einen 2 l Rundkolben überführt. Am Rotationsverdampfer wurden innerhalb von 90 Minuten bei 80°C 428 g Wasser entfernt.

Eine anschließende Bestimmung der B-Zeit ergab 6 Minuten.

Während der Abkühlung im Wasserbad wurden dem Phenolharz 70 g Methanol zugegeben, das Gemisch in eine Glasflasche überführt und im Kühlschrank gelagert.

(b) Ein Novolakimprägnierharz wurde analog dem unter (a) beschriebenen Verfahren hergestellt, wobei jedoch 6 Ma-% Hexamethylentetramin, bezogen auf die Summe aus Harzkomponenten und Hexamethylentetramin, zugegeben wurden.

Die so synthetisierten Harze wurden zur Herstellung von Laminaten verwendet, an welchen Recyclingversuche durchgeführt wurden.

**C Abbaubarkeits-Beispiele**

**Beispiel 1**

Aus nach dem Synthesebeispiel B1 synthetisierten Resolharzsystemen wurden drei verschiedene glasfaserverstärkte Laminate hergestellt. Nach Imprägnierung des Glasfasergewebes mit dem in Methanol gelösten Phenolharz erfolgte eine Vorvernetzung im Umluftofen. Anschließend wurden die so hergestellten Prepregs mittels Hydraulikpresse zu zweilagigen Laminaten verpresst. Variiert wurden sowohl die Härtungstemperatur (Versuch 1: 130°C, Versuch 2: 150°C, Versuch 3: 170°C) als auch die Härtungszeit (Versuch 1: 30 min, Versuch 2: 15 min, Versuch 3: 15 min).

Anschließend wurden die hergestellten Laminate für 24 h in refluxierenden 1,2-Diaminoethan (Siedepunkt 116°C) gekocht.

Wie aus **Tabelle 1** ersichtlich, kann die Phenolharzmatrix von Laminaten, welche bei niedriger Temperatur gehärteten wurden, signifikant besser zersetzt werden als die Phenolharzmatrix von bei höherer Temperatur gehärteten Laminaten. Der wie unter A angegeben mittels TGA bestimmte, prozentuale Anteil an abgebauter Harzmatrix *HA* ist folglich bei dem bei 130°C gehärteten Laminat 1 (57$\pm$10 Ma-%) wesentlich höher als bei dem bei 170°C gehärteten Laminat 3 (1 Ma-%).

Mittels Elementaranalyse (für jedes der drei unterschiedlich gehärteten Harze zwei- bis dreifach durchgeführt) konnte festgestellt werden, dass die bei niedrigerer Temperatur gehärteten Laminate einen signifikant höheren Sauerstoffanteil aufweisen als jene, die bei höherer Temperatur gehärtet wurden. Dies lässt auf eine unterschiedliche Netzwerkstruktur, das heißt einen unterschiedlichen Anteil an Dimethylenetherbrückenbindungen schließen. Je höher der Sauerstoffanteil im untersuchten Phenolharzsystem ist, desto höher ist auch der Anteil an Dimethylenetherbrückenbindungen und desto besser lässt sich das jeweilige Phenolharzsystem chemisch zersetzen.

Dies bedeutet, dass bereits durch eine geschickte Auswahl des Härtungsregimes eine signifikant bessere Zersetzbarkeit und folglich Recyclingfähigkeit des ausgehärteten Phenolharzes erreicht wird.

Tabelle 1

| Nr. | N [Ma-%] | C [Ma-% | H [Ma-%] | $m_{Probe}$ [mg] | N,C,H [Ma-%] | O [Ma-%] | Harzabbau in 1,2-Diaminoethan [Ma-%] | $T_{Härtung}$ [°C] | $t_{Härtung}$ [min] |
|---|---|---|---|---|---|---|---|---|---|
| 1.1 | 0,21 | 75,03 | 6,02 | 1,38 | - | - | **57±10** | **130** | 30 |
| 1.2 | 0,22 | 75,10 | 6,04 | 1,33 | - | - | | | |
| **1** | **0,21** | **75,06** | **6,03** | - | **81,31** | **18,69** | | | |
| 2.1 | 0,22 | 75,92 | 6,00 | 1,37 | - | - | **41±10** | **150** | 15 |
| 2.2 | 0,22 | 76,00 | 6,01 | 1,39 | - | - | | | |
| 2.3 | 0,24 | 77,21 | 5,84 | 1,35 | - | - | | | |
| **2** | **0,23** | **76,38** | **5,95** | - | **82,56** | **17,44** | | | |
| 3.1 | 0,24 | 77,61 | 5,85 | 1,34 | - | - | **1** | **170** | 15 |
| 3.2 | 0,24 | 77,30 | 5,84 | 1,36 | - | - | | | |
| **3** | **0,24** | **77,46** | **5,84** | - | **83,54** | **16,46** | | | |

**Beispiel 2**

Beispiel 2(a): Ein nach dem Synthesebeispiel B2(a) synthetisiertes Novolakharzsystem, gelöst in Methanol, wurde zur Imprägnierung eines Glasfasergewebes genutzt. Danach erfolgte eine Vorvernetzung im Umluftofen. Anschließend wurden die so hergestellten Prepregs mittels Hydraulikpresse zu zweilagigen Laminaten verpresst. Die Härtungstemperatur betrug 130°C und die Härtungszeit 40 min.

Anschließend wurde das hergestellte Laminat für 1 h in refluxierenden 2-Aminoethanol (Siedepunkt 172°C) gekocht. Die Harzmatrix der gehärteten Laminate konnte teilweise zersetzt werden.

Beispiel 2(b): Ein nach dem Synthesebeispiel B2(b) synthetisiertes Navolakharzsystem, gelöst in Methanol, wurde zur Imprägnierung eines Glasfasergewebes genutzt. Danach erfolgte eine Vorvernetzung im Umluftofen. Anschließend wurden die so hergestellten Prepregs mittels Hydraulikpresse zu zweilagigen Laminaten verpresst. Die Härtungstemperatur betrug 130°C und die Härtungszeit teils 40 min, teils 45 min.

Anschließend wurde das hergestellte Laminat für 24 h in refluxierenden 1,2-Diaminoethan (Siedepunkt 116°C) gekocht. Die Harzmatrix der gehärteten Laminate konnte vollständig zersetzt werden, so dass ein vollständig von der Matrix befreites Gewebe zurück gewonnen wurde.

Beispiel 2(c): Beispiel 2(b) wurde mit der Änderung wiederholt, dass die Härtungstemperatur 150°C und die Härtungszeit 30 min betrugen. Anschließend wurde das hergestellte Laminat für 24 h in refluxierenden 1,2-Diaminoethan (Siedepunkt 116°C) gekocht. Die Harzmatrix der gehärteten Laminate konnte zu ca. 92% zersetzt werden.

Beispiel 2(d): Beispiel 2(b) wurde mit der Änderung wiederholt, dass die Härtungstemperatur 170°C und die Härtungszeit 20 min betrugen. Anschließend wurde das hergestellte Laminat für 24 h in refluxierenden 1,2-Diaminoethan (Siedepunkt 116°C) gekocht. Die Harzmatrix der gehärteten Laminate konnte zu ca. 42 % zersetzt werden.

Die bessere Abbaubarkeit des in Beispiel 2(b) verwendeten Laminates gegenüber den Laminaten in Beispiel 2(c) und 2(d) lässt sich auf den größeren Anteil an Aminodimethylenbrücken zurückführen. Der höhere Anteil an Aminodimethylenbrücken ist mit der niedrigeren Härtungstemperatur korreliert.

| Nr. | N [Ma-%] | C [Ma-% | H [Ma-%] | $m_{Probe}$ [mg] | N,C,H [Ma-%] | O [Ma-%] | Harzabbau in 1,2-Diaminoethan [Ma-%] | $T_{Härtung}$ [°C] | $t_{Härtung}$ [min] |
|---|---|---|---|---|---|---|---|---|---|
| 1 | 2,841 | 74,926 | 6,771 | 1,339 | - | - | **100** | **130** | 45 |
| 2 | 2,569 | 74,887 | 6,722 | 1,317 | - | - | | | |
| **2 (c)** | **2,71** | **74,91** | **6,75** | - | **84,36** | **15,64** | | | |

(fortgesetzt)

| Nr. | N [Ma-%] | C [Ma-%] | H [Ma-%] | $m_{Probe}$ [mg] | N,C,H [Ma-%] | O [Ma-%] | Harzabbau in 1,2-Diaminoethan [Ma-%] | $T_{Härtung}$ [°C] | $t_{Härtung}$ [min] |
|---|---|---|---|---|---|---|---|---|---|
| 1 | 2,446 | 75,404 | 6,712 | 1,301 | **-** | **-** | **92±10** | **150** | 30 |
| 2 | 2,471 | 75,59 | 6,686 | 1,328 | **-** | **-** | | | |
| **2 (d)** | **2,46** | **75,50** | **6,70** | **-** | **84,65** | **15,35** | | | |
| 1 | 2,075 | 76,097 | 6,599 | 1,388 | - | - | **42±10** | **170** | 20 |
| 2 | 2,065 | 76,062 | 6,606 | 1,412 | - | - | | | |
| **2 (e)** | **2,07** | **76,08** | **6,60** | **-** | **84,75** | **15,25** | | | |

**Beispiel 3**

Aus einem luftfahrtzertifizierten, kommerziell verfügbaren Prepregsystem mit Phenolharzmatrix (Resolharz) der Gurit Holding AG (PF812-G226-40) wurden mehrere zweilagige Laminate hergestellt. Die Aushärteparameter Temperatur und Zeit wurden wie folgt eingestellt:

- 120°C für 60 min
- 140°C für 30 min
- 150°C für 30 min
- 160°C für 30 min
- 170°C für 30 min
- 180°C für 30 min

Die hergestellten Laminate wurden alle für 24 h in refluxierendem 1,2-Diaminoethan (Siedepunkt 116°C) gekocht.

Wie aus **Figur 2** ersichtlich ist, kann die Harzmatrix der bei niedrigerer Temperatur gehärteten Laminate vollständig zersetzt werden, so dass mit dem erfindungsgemäßen Verfahren ein vollständig von der Matrix befreites Gewebe zurück gewonnen wird. Aber auch die teilbefreiten, noch mit Restmatrix behafteten Gewebe können als Sekundärrohstoff dienen und einer weiteren Verwendung zugeführt werden (vgl. hierzu Beispiel 13).

**Beispiel 4**

Aus einem luftfahrtzertifizierten, kommerziell verfügbaren Prepregsystem mit Phenolharzmatrix (Resolharz) (Hexcel Hexply 250-38-644) wurden mehrere zweilagige Laminate hergestellt. Die Aushärteparamater Temperatur und Zeit wurden wie folgt eingestellt:

- 135°C für 90 min
- 135°C für 180 min
- 150°C für 30 min
- 150°C für 60 min

Die hergestellten Laminate wurden alle für 24 h in refluxierendem 1,2-Diaminoethan (Siedepunkt 116°C) gekocht.

Wie aus **Figur 3** ersichtlich ist, kann die Harzmatrix der gehärteten Laminate vollständig zersetzt werden, sodass mit dem erfindungsgemäßen Verfahren ein vollständig von der Matrix befreites Gewebe zurück gewonnen wird.

**Beispiel 5**

Beispiel 3 wurde mit der Änderung wiederholt, dass anstelle des luftfahrtzertifizierten Prepregsystems mit Phenolharzmatrix Hexcel Hexply 250-38-644 das luftfahrtzertifizierte, kommerziell verfügbare Prepregsystem mit Phenolharzmatrix Hexcel Hexply 250-44-759 eingesetzt wurde. Das Ergebnis war identisch (siehe **Figur 4**).

**Beispiel 6**

Aus einem luftfahrtzertifizierten, kommerziell verfügbaren Prepregsystem mit Phenolharzmatrix (Hexcel Hexply 200-38-644) wurden mehrere zweilagige Laminate hergestellt. Die Aushärteparamater Temperatur und Zeit wurden wie folgt eingestellt:

- 135°C für 90 min
- 150°C für 30 min

Die hergestellten Laminate wurden alle für 24 h in refluxierenden 1,2-Diaminoethan (Siedepunkt 116°C) gekocht.

Wie aus **Figur 5** ersichtlich, kann die Harzmatrix der bei 135°C gehärteten Laminate vollständig zersetzt werden. Es werden von der Harzmatrix komplett befreite Glasfasergewebe zurück gewonnen. Aber auch die teil befreiten, noch mit Restmatrix behafteten Gewebe, die aus den bei 150°C gehärteten Laminaten erhalten wurden, können als Sekundärrohstoff dienen und einer weiteren Verwendung zugeführt werden (vgl. hierzu Beispiel 13).

**Beispiel 7**

Beispiel 3 wurde mit weiteren, von einem anderen Hersteller kommerziell erhältlichen Prepregsystemen mit Phenolharzmatarix wiederholt, wobei folgende Aushärteparameter (Temperatur und Zeit) eingestellt wurden:

- 135°C für 75 min
- 155°C für 30 min

Wie aus **Figur 6** ersichtlich ist, kann die Harzmatrix der bei 135°C gehärteten Laminate C und D vollständig zersetzt werden. Es werden von der Harzmatrix komplett befreite Glasfasergewebe zurück gewonnen. Aber auch die teilbefreiten, mit Restmatrix behafteten Gewebe können als Sekundärrohstoff dienen und einer weiteren Verwendung zugeführt werden (vgl. hierzu Beispiel 13).

**Beispiel 8**

Aus zwei von Prefere Resins (ehemals: Dynea Erkner GmbH) vertriebenen Novolakharz-Prepolymeren mit unterschiedlicher Molmasse [Niedermolekular: 82 4439X DP106 (Molmasse kleiner 10.000 g/mol); Hochmolekular: 82 4439X DP132 (Molmasse kleiner 100.000 g/mol)] wurden zunächst Laminate hergestellt. Die Aushärtung erfolgte für 30 min bei 150°C. Als Härter wurden je zwei unterschiedliche Konzentrationen von Hexamethylentetramin (HEXA) (6 bzw. 11 Ma-%, bezogen auf die Summe der Masse aus Novolak und HEXA, hinzugegeben.

Die hergestellten Laminate wurden alle für 24 h in refluxierendem 1,2-Diaminoethan (Siedepunkt 116 °C) gekocht.

Wie in Tabelle 2 zu sehen ist, enthalten die mit einem größeren Massenanteil an Hexamethylentetramin gehärteten Novolakharze einen signifikant größeren Anteil an Stickstoff, was auf einen größeren Anteil an Aminodimethylenbrücken zurückzuführen ist. Der Stickstoffanteil wurde mittels Elementaranalyse bestimmt.

Die bessere Abbaubarkeit lässt sich auf den größeren Anteil an Aminodimethylenbrücken zurückführen.

Tabelle 2

| Nr. | N [Ma-%] | C [Ma-%] | H [Ma-%] | $m_{Probe}$ [mg] | N,C,H [Ma-%] | O [Ma-%] | Harzabbau in 1,2-Diamino-ethan [Ma-%] | HEXAAnteil bei Herstellung [Ma-%] |
|---|---|---|---|---|---|---|---|---|
| Niedermolekular 82 4439X DP106 | | | | | | | | |
| 1.1 | 1,24 | 76,50 | 6,08 | 1,32 | | | 33±10 | 6 |
| 1.2 | 1,22 | 76,57 | 6,04 | 1,29 | | | | |
| 1 | 1,23 | 76,53 | 6,06 | | 83,82 | 16,18 | | |
| 2.1 | 2,73 | 75,51 | 6,11 | 1,31 | | | 66±10 | 11 |
| 2.2 | 2,69 | 75,67 | 6,04 | 1,32 | | | | |
| 2 | 2,71 | 75,59 | 6,07 | | 84,37 | 15,63 | | |

(fortgesetzt)

| | | | | | | | | |
|---|---|---|---|---|---|---|---|---|
| Hochmolekular 82 4439X DP132 | | | | | | | | |
| 3.1 | 1,43 | 76,87 | 5,97 | 1,33 | | | 26±10 | 6 |
| 3.2 | 1,44 | 76,81 | 5,96 | 1,38 | | | | |
| 3 | 1,44 | 76,84 | 5,97 | | 84,24 | 15,76 | | |
| 4.1 | 2,19 | 76,08 | 6,05 | 1,35 | | | 62±10 | 11 |
| 4.2 | 2,20 | 76,05 | 6,06 | 1,31 | | | | |
| 4 | 2,20 | 76,06 | 6,05 | | 84,31 | 15,69 | | |

**Beispiel 9**

Ein zweilagiges Laminat aus dem kommerziell erhältlichen Prepreg mit Phenolharzmatrix (Resolharz) PHG600-68-37 der Firma Gurit wurde nach den Angaben des Herstellers unter einem Härtungsregime bei 125°C für 120 min hergestellt. Die Prepregs sind laut Herstellerangaben für monolithische Strukturen für die Luftfahrt, die Schifffahrt, Züge und Automobile geeignet. Das Laminat wurde anschließend 24 Stunden lang in refluxierenden 1,2-Diaminoethan (Siedepunkt 116°C) gekocht. Der Prozentsatz an abgebauter Matrix HA betrug 40±10% Ma-%, bezogen auf das Gewicht der Matrix.

**Beispiel 10**

Beispiel 9 wurde mit der Änderung wiederholt, dass als kommerziell erhältliches Prepreg mit Phenolharzmatrix (Resolharz) PHG860-68-40 der Firma Gurit eingesetzt wurde, geeignet für monolithische Strukturen und Sandwichstrukturen im selben Anwendungssegment wie PHG600-68-37. Die Härtung erfolgte für eine Dauer von 60 min bei 140°C. Der Prozentsatz an abgebauter Matrix HA betrug 62±10 Ma-%, bezogen auf das Gewicht der Matrix.

**Beispiel 11**

Es wurden zunächst zweilagige Laminate aus kommerziell erhältlichen Prepregs mit Phenolharzmatrix hergestellt, die nachfolgend mit 1,2-Diaminoethan und 2-Aminoethanol für eine Dauer von maximal 24 h behandelt wurden. Die Zersetzung wurde immer unter Rückfluss bei Siedepunkttemperatur des jeweiligen Reagenzes durchgeführt.

In der Tabelle 3 wird der prozentuale Abbau des Matrixharzes angegeben. Die Harzmatrix der Laminate 3 und 4 lässt sich unter Verwendung von 1,2-Diaminoethan komplett zersetzen, so dass von Harz befreite, saubere Fasern vorliegen. Die Harzmatrix dieser Laminate konnte zudem auch mit 2-Aminoethanol vollständig zersetzt werden. Es ist davon auszugehen, dass auch die Harzmatrizes der Laminate der Beispiele 3 und 4 mit 2-Aminoethanol vollständig abgebaut werden können.

Tabelle 3

| Bezeichnung | Prepregtyp | Härtungsregime | Harzabbau [Ma-%] Recyclingreagenz 1 1,2-Diaminoethan | Harzabbau [Ma-%] Recyclingreagenz 7 2-Aminoethanol |
|---|---|---|---|---|
| Laminat 1 | Gurit PHG600-44-37 | 125°C/ 120 min | 64 ± 10 | 59 ± 10 |
| Laminat 2 | Hexcel Hexply 200-38-644-127 cm | 135°C/ 90 min | 99 | 91 ± 8 |
| Laminat 3 | Hexcel Hexply 250-38-644 | 135°C/ 90 min | 100 | 100 |
| Laminat 4 | Hexcel Hexply 250-44-759 | 135°C/ 90 min | 100 | 100 |

### Beispiel 12

Mit Laminat 1 wurde ein Screening mit 6 verschiedenen Zersetzungsreagenzien durchgeführt. Die Zersetzung wurde immer am Siedepunkt des jeweiligen Reagenzes unter Rückfluss durchgeführt. Als Zersetzungsreagenzien dienten aliphatische Diamine, Monoamine und Aminoalkohole unterschiedlicher Kettenlängen.

**Figur 7** zeigt die bei den Versuchen erhaltenen Resultate. Es zeigt sich, dass Amine grundsätzlich geeignet sind, Phenolharze zu zersetzen, denn sowohl einfache, vor allem primäre Monoamine als auch Diamine und Aminoalkohole können für die erfindungsgemäße Aminolyse eingesetzt werden. Die besten Ergebnisse für Laminat 1 wurden mit n-Octylamin und 3-Aminopropanol erhalten. Der Vergleich der unterschiedlichen Aminolysereagenzien zeigt außerdem, dass längerkettige Alkyl- bzw. Alkylengruppen im Reagenz die Zersetzungsgeschwindigkeit bzw. den Harzabbau im Vergleich zu Reagenzien mit kürzerkettigen Alkyl(en)gruppen positiv beeinflussen können (siehe den Vergleich zwischen n-Butylamin und n-Octylamin und den Vergleich zwischen 2-Aminoethanol und 3-Aminopropanol).

Die in diesem Beispiel erläuterten Untersuchungen zeigen auch, dass der Abbau mit difunktionellen Aminen wie 1,2-Diaminoethan oder 2-Aminoethanol gegenüber einem einfachen Amin ohne weitere reaktive Gruppe (z.B. einer zweiten Aminogruppe oder einer Hydroxylgruppe) nicht notwendigerweise schneller oder vollständiger verlaufen muss.

### Beispiel 13

Aus nach dem Synthesebeispiel B1 synthetisierten Resolharzsystem wurde ein glasfaserverstärktes Laminat hergestellt. Nach Imprägnierung des Glasfasergewebes mit dem in Methanol gelösten Phenolharz erfolgte eine Vorvernetzung im Umluftofen. Anschließend wurden die so hergestellten Prepregs mittels Hydraulikpresse zu einem zweilagigen Laminat verpresst. Die Härtungstemperatur betrug immer 150°C und die Härtungszeit 15 min.

Anschließend wurden die hergestellten Laminate für 24 h in verschiedenen Reagenzien unter Rückfluss gekocht.

**Figur 8** zeigt die bei den Versuchen ermittelten Ergebnisse. Es zeigt sich, dass Amine grundsätzlich geeignet sind, Phenolharze zu zersetzen, denn sowohl einfache, vor allem primäre Monoamine als auch Diamine und Aminoalkohole können für die erfindungsgemäße Aminolyse eingesetzt werden. Bei diesem Phenolharzsystem werden die besten Ergebnisse mit 2-Aminoethanol, 1,2-Diaminoethan, n-Hexylamin, n-Butylamin und 3-Aminopropanol erzielt.

### Beispiel 14

Dieses Beispiel zeigt, dass nicht nur aliphatische Amine als Abbaureagenz dienen können, sondern auch aromatische Amine.

Ein nach dem Synthesebeispiel B2(b) synthetisiertes Navolakharzsystem, gelöst in Methanol, wurde zur Imprägnierung eines Glasfasergewebes genutzt. Danach erfolgte eine Vorvernetzung im Umluftofen. Anschließend wurden die so hergestellten Prepregs mittels Hydraulikpresse zu zweilagigen Laminaten verpresst. Die Härtungstemperatur betrug 130°C und die Härtungszeit 45 min.

Anschließend wurde das hergestellte Laminat für 72 h in refluxierenden Anilin (Siedepunkt 184°C) gekocht. Die Harzmatrix der gehärteten Laminate konnte vollständig zersetzt werden, so dass ein vollständig von der Matrix befreites Gewebe zurück gewonnen wurde.

### Beispiel 15

Dieses Beispiel zeigt, dass die Aminolyse auch in Gegenwart eines inerten Lösungsmittels durchgeführt werden kann.

Ein nach dem Synthesebeispiel B2(b) synthetisiertes Navolakharzsystem, gelöst in Methanol, wurde zur Imprägnierung eines Glasfasergewebes genutzt. Danach erfolgte eine Vorvernetzung im Umluftofen. Anschließend wurden die so hergestellten Prepregs mittels Hydraulikpresse zu zweilagigen Laminaten verpresst. Die Härtungstemperatur betrug 130°C und die Härtungszeit 45 min.

Anschließend wurde das hergestellte Laminat für 24 h in einer Mischung aus 50 Ma-% Chloroform und 50 Ma-% 2-Aminoethanol unter Rückfluss gekocht. Die Harzmatrix der gehärteten Laminate konnte vollständig zersetzt werden, so dass ein vollständig von der Matrix befreites Gewebe zurück gewonnen wurde.

### Beispiel 16

Zeitabhängigkeit des Abbaus kommerziell verwendeter Bauteile in 1,2-Diaminoethan:
Es wurden Abbauversuche an Decklagen originaler Sidewall-, Ceiling- und Dado-Panels eines Airbus A320 sowie an Decklagen eines originalen Floor-Panels eines A300-600 durchgeführt. Alle Decklagen weisen, wie es bei Kabinenbauteilen in der Luftfahrt üblich ist, eine Phenolharzmatrix auf. Abhängig vom Bauteiltyp wurde teils vollständig von der Harzmatrix befreites Gewebe, teils mit Restharz behaftetes Gewebe erhalten. Ferner wurde die zur Matrixzersetzung der Decklagen von Floor-, Sidewall- und Dado-Panel benötigte Zeit bestimmt. Da sich die Harzmatrix des Ceiling-Panels nicht vollständig zersetzen lässt, wurde hier auf eine zeitabhängige Bestimmung der Matrixzersetzung verzichtet. **Figur 10** zeigt die Ergebnisse des zeitabhängigen Abbaus der Harzmatrizes der verschiedenen Decklagen in 1,2-Diaminoethan unter Rückfluss bei 116°C. Alle Decklagenmatrizes sind mit dem erfindungsgemäßen Verfahren innerhalb von 8 Stunden zu mindestens 97% zersetzt.

**Beispiel 17**

Abbau kommerziell verwendeter Bauteile bei 40°C in 1,2-Diaminoethan:
Es wurden Abbauversuche an Decklagen originaler Ceiling- und Dado-Panels eines Airbus A320 durchgeführt. Alle Decklagen weisen, wie es bei Kabinenbauteilen in der Luftfahrt üblich ist, eine Phenolharzmatrix auf. Abhängig vom Bauteiltyp wurde teils vollständig von der Harzmatrix befreites Gewebe, teils mit Restharz behaftetes Gewebe erhalten.

So ließ sich die Phenolharzmatrix des Dado-Panels nach 11.600 h in 1,2-Diaminoethan vollständig zersetzen, die Phenolharzmatrix des Ceiling-Panels nach 11.600 h in 1,2-Diaminoethan zu $43 \pm 10$ Ma-% zersetzen.

**Beispiel 18**

Untersuchung der Beständigkeit von Verstärkungsfasern in Zersetzungsreagenzien - Zugversuche.

Die untersuchten Faserrovings und -garne wurden bei verschiedenen Temperaturen in unterschiedlichen Zersetzungsreagenzien in 50 ml Rundhalskolben mit Dimrothkühler gelagert. Nach der Behandlung wurden die Faserrovings mit Ethanol gewaschen und bei Raumtemperatur im Vakuumtrockenschrank getrocknet. Abschließend erfolgten Zugversuche mit einer Instron 3369 mit 500 N Kraftmessdose und einem speziellen Modul zur Prüfung filigraner Proben. Der Abstand der beiden Einspannbacken und somit die Messlänge betrug immer 30 mm und die Prüfgeschwindigkeit wurde auf 2,5 $mm \cdot min^{-1}$ eingestellt.

Um zu überprüfen, ob der Waschvorgang einen Einfluss auf die Resultate hat, wurden Fasern mit Ethanol gewaschen und hinsichtlich ihrer mechanischen Eigenschaften mit ungewaschenen Fasern verglichen. Bei keinen der hier verwendeten Fasertypen konnte ein Einfluss des Waschvorgangs auf die mechanischen Eigenschaften festgestellt werden.

Zum Einsatz kamen PAN-basierte 3K Carbonfaserrovings (2.000 dtex), Glasfaserrovings (E-Glas; ca. 680 dtex), Aramidfaserrovings (ca. 1.730 dtex), Polyamidfaserrovings (PA 6, ca. 1.880 dtex) sowie verdrillte Naturfasern (flachsbasiert; ca. 530 dtex).

Fünf ausgewählte Fasertypen wurden bei allen folgend dargestellten Versuchen je 1 h in je drei verschiedenen Reagenzien bei der jeweils eingestellten Temperatur gelagert und deren mechanische Eigenschaften anhand von Zugversuchen an Faserrovings bzw. Fasergarnen geprüft.

Im Falle der Carbonfasern ist bei allen Reagenzien unter allen drei gewählten Temperaturen kein signifikanter Einfluss auf deren mechanische Eigenschaften zu verzeichnen. **Figur 11** zeigt die Ergebnisse der mechanischen Zugprüfungen unbehandelter und behandelter Carbonfaserrovings.

Bei Glasfasern ist im Rahmen der Messgenauigkeit bei keiner Temperatur eine Verschlechterung der mechanischen Eigenschaften durch die Behandlung mit den unterschiedlichen Reagenzien zu verzeichnen (siehe **Figur 12**).

Aramidfasern werden durch Einsatz von 1,2-Diaminoethan oder 2-Aminoethanol geschädigt. Besonders im Fall des 2-Aminoethanol ist eine starke Reduzierung der mechanischen Eigenschaften in Abhängigkeit von der Lagertemperatur zu verzeichnen. Bei diesen Versuchen ist ebenfalls eine Korrelation zwischen Zugdehnung und Zugfestigkeit der Fasern festzustellen. Aramidfaserverstärkte Verbundkunststoffe können jedoch mit n-Octylamin recycelt werden. so wird empfohlen, beispielsweise auf n-Octylamin zurückzugreifen (siehe **Figur 13**).

Im Falle der Naturfasern ist kein signifikanter negativer Einfluss auf deren mechanische Eigenschaften bei allen Reagenzien unter allen drei gewählten Temperaturen zu verzeichnen (siehe **Figur 14**). Besonders bemerkenswert ist hier die starke Erhöhung der Bruchdehnung nach Lagerung in Ethylendiamin. Dies untermauert die Vermutung, dass die in diesen Experimenten verwendeten Flachsfasern bei Lagerung in 1,2-Diaminoethan chemisch modifiziert werden.

Die Polyamidfasern (PA 6) bilden eine Ausnahmeerscheinung im Rahmen der hier durchgeführten Arbeiten zur Chemikalienbeständigkeit von Verstärkungsfasern. Es wurde festgestellt, dass sich Polyamid 6-Fasern in refluxierendem 2-Aminoethanol auflösen, während das Polyamid in weniger polaren und/oder niedrigsiedenden Reagenzien nicht löslich ist. Auch wurde festgestellt, dass sich besonders 1,2-Diaminoethan und n-Octylamin für die Zersetzung von Polyamid enthaltenden Verbundkunststoffen eignen, da hier auch unter refluxierenden Bedingungen kein signifikanter Einfluss auf die mechanischen Eigenschaften zu verzeichnen ist (siehe **Figur 15**).

**Beispiel 19**

Untersuchung der Beständigkeit von Carbon- und Glas-Verstärkungsfasern in Zersetzungsreagenzien - Zugversuche

Die zu untersuchenden Fasern wurden analog Beispiel 15 in 50 ml Rundhalskolben mit aufgesetztem Dimrothkühler gelagert. Die **Figuren 16 und 17** zeigen die Resultate der Zugversuche (Zugkraft jeweils links, dunklerer Balken, Zugdehnung jeweils rechts, hellerer Balken) an unbehandelten und für 24 h in den refluxierenden Reagenzien gelagerten Carbonfaserrovings (Figur 15) bzw. Glasfasern (Figur 16). Folgende Tabelle zeigt eine Übersicht der verwendeten Reagenzien sowie deren Siedepunkte. Die Fasern werden durch die untersuchten Reagenzien nicht beschädigt und könnten somit nach einer durchgeführten Zersetzung einer phenolharzhaltigen Matrix erneut Einsatz als Verstärkungsfasern finden.

| Reagenz | $T_{sdp.}$ [°C] |
|---|---|
| *n*-Octylamin | 180 |
| 1,2-Diaminoethan | 116 |
| 2-Aminoethanol | 172 |

**Beispiel 20**

Dieses Beispiel zeigt die Nutzung des erfindungsgemäßen Abbauverfahrens zum Reinigen von verschmutzten Gegenständen wie Werkzeugen.

Ein mit ausgehärteten Phenolharzanhaftungen verunreinigtes Aluminiumwerkzeug zur Herstellung von Noppenwaben wurde für ca. 24 h im verschlossenen Becherglas in auf 70°C erwärmtem Ethylendiamin zur Reinigung gelagert. Nach Entnahme der Aluminiumform konnten die durch die Aminolyse zersetzten Phenolharzreste mit Ethanol abgewaschen werden.

**Beispiel 21**

Abbau kommerziell verwendeter Bauteile in 2-Aminoethanol in einer Mikrowellenanlage:
Es wurden Abbauversuche an Decklagen eines originalen Dado-Panels eines Airbus A320 in einer Mikrowellenanlage bei unterschiedlichen Leistungsstufen durchgeführt. Die Dado-Panel Decklagen weisen, wie es bei Kabinenbauteilen in der Luftfahrt üblich ist, eine Phenolharzmatrix auf.

Die Phenolharzmatrix des Dado-Panels konnte nach 3,8 min bei einer Einstrahlleistung von 3,1 kW, nach 2,6 min bei einer Einstrahlleistung von 4,1 kW und nach 2,2 min bei einer Einstrahlleistung von 5,1 kW vollständig zersetzt werden. Der Grad der Zersetzung wurde mittels TGA überprüft. Zur Zersetzung wurde Mikrowellenstrahlung der Frequenz 2,45 GHz eingesetzt.

**Figur 19** zeigt die Heizrampen der drei durchgeführten Experimente.

**D Neuaufbau von Polymeren unter Verwendung der erfindungsgemäßen Abbauprodukte**

**Beispiel 1** - **Nachweis von $H_2N$- und HNR- bzw. OH-Gruppen**

Die nach Beispiel 2(a) durch Zersetzung mit 2-Aminoethanol gewonnenen Abbauprodukte wurden hinsichtlich ihrer Hydroxyl- und Aminzahl untersucht. Nach Zweifachbestimmung konnte eine OH-Zahl von 912 mgKOH/g (rel. StawW = 0,88%) und eine Aminzahl von 5,91 mol/kg (rel. StabW = 0,17%) ermittelt werden. Die Bestimmung der Hydroxylzahl erfolgte in Anlehnung an DIN 53240-2 (2007), die Bestimmung der Aminzahl in Anlehnung an DIN 1877-2 (2000).

Demnach besitzen die Abbauprodukte wie in **Figur 18** dargestellt freie Hydroxyl- und Aminfunktionalitäten, welche durch Umsetzung mit weiteren mindestens bifunktionellen oder bifunktionalisierbaren Monomeren, insbesondere mit den Ausgangskomponenten zur Herstellung von Phenolharzen, erneut zu Polymeren umgesetzt werden können.

**Beispiel 2**

Aus einem nach dem Synthesebeispiel B2(b) synthetisierten Novolakharzsystem wurden glasfaserverstärkte Sandwiche hergestellt.

Nach Imprägnierung eines Glasfasergewebes mit dem in Methanol gelösten analog B2(b) synthetisierten Novolakharz erfolgte eine Vorvernetzung im Umluftofen. Anschließend wurden die so hergestellten Prepregs mittels Hydraulikpresse mit einer Honigwabenstruktur als Kernmaterial zu Sandwichen verpresst (135°C für 40 min). Nachfolgend wurden die ausgehärteten Decklagen der Sandwiche wieder entfernt und die Phenolharzmatrix einer Aminolyse mit 2-Aminoethanol unterzogen.

Die vom Harz befreiten Faserlagen wurden anschließend aus der Lösung entfernt, gewaschen und getrocknet.

Das überschüssige Aminolysereagenz wurde bei vermindertem Druck vom Recyclat getrennt.

Anschließend wurde erneut ein Novolak nach Synthesebeispiel B2(a) synthetisiert und mit unterschiedlichen Anteilen an Recyclat kombiniert (10, 25 und 50 Ma-%). Es wurden dann 6 Ma-% Hexamethylentetramin, bezogen auf die Summe aus Novolak, Recyclat und Hexamethylentetramin, hinzugegeben.

Aus dem so hergestellten recyclathaltigen Novolakharz konnten erneut Prepregs und hieraus Sandwichbauteile hergestellt werden.

**Beispiel 3**

Dieses Beispiel betrifft die Wiederverwertung von vollständig von Phenolharzmatrix befreiten Geweben und von mit Restphenolharz behafteten Geweben.

Bauteile, hergestellt aus vollständig von der alten Matrix befreiten Geweben, zeigen nahezu den gleichen Biegemodul wie Bauteile mit neuem Gewebe.

Die **Figur 9** zeigt den Biegemodul verschiedener Bauteile mit Glasfaser-Gewebeverstärkung wie im Ausführungsbeispiel A beschrieben:

- Referenz: Bauteil, hergestellt aus neuem Gewebe.
- Teilrecycelt: Bauteil hergestellt aus Gewebe mit anhaftendem Restharz.
- Recycelt: Bauteil hergestellt aus vollständig von der alten Matrix befreiten Gewebe.

**Patentansprüche**

1. Verfahren zum Abbau eines phenolharzhaltigen Materials, **dadurch gekennzeichnet, dass** das phenolharzhaltige Material einer Aminolyse mit einem mindestens eine Aminogruppe enthaltenden Reagenz unterworfen wird.

2. Verfahren nach Anspruch 1, **dadurch gekennzeichnet, dass** das mindestens eine Aminogruppe enthaltende Reagenz Ammoniak, ein aliphatisches oder aromatisches Amin oder Hydrazin ist, das weitere funktionelle Gruppen aufweisen kann, oder aus einer Mischung von zweien oder mehreren der genannten Reagenzien besteht.

3. Verfahren nach Anspruch 1 oder 2, **dadurch gekennzeichnet, dass** das mindestens eine Aminogruppe enthaltende Reagenz ausgewählt ist aus der Gruppe von Verbindungen, die aliphatische primäre Amine, aromatische Amine, Aminoalkohole und Diamine umfasst, wobei das Reagenz eine, zwei oder mehr dieser Verbindungen aufweist.

4. Verfahren nach einem der vorstehenden Ansprüche, **dadurch gekennzeichnet, dass** das die mindestens eine Aminogruppe enthaltende Reagenz druckfrei oder unter Druck in kondensiertem Zustand oder nach Aufschmelzen bei erhöhter Temperatur als Lösungsmittel verwandt wird.

5. Verfahren nach einem der Ansprüche 1 bis 3, **dadurch gekennzeichnet, dass** die Aminolyse in einem Lösungsmittel durchgeführt wird.

6. Verfahren nach einem der voranstehenden Ansprüche, worin das Phenolharz des phenolharzhaltigen Materials ein Resol ist.

7. Verfahren nach einem der Ansprüche 1 bis 5, worin das Phenolharz des phenolharzhaltigen Materials ein Novolak mit Dimethylenaminobrücken ist, wobei der Anteil an Dimethylenaminobrücken einem Stickstoffgehalt des Phenolharzes im Material von mindestens 1,2 Ma-% entspricht.

8. Verfahren nach einem der Ansprüche 1 bis 5, worin das Phenolharz ein Novolak ist, das unter Verwendung mindestens eines Triglycerids oder Triglycerid-Gemischs als zusätzlicher Komponente hergestellt wurde.

9. Verfahren nach einem der voranstehenden Ansprüche, worin das phenolharzhaltige Material ein phenolharzbasierter

Faserverbundkunststoff ist und der Faserverbund, gegebenenfalls mit verbliebenen Phenolharzresten daran, nach erfolgter Aminolyse von dem die mindestens eine Aminogruppe enthaltenden Reagenz getrennt und optional wiederverwendet wird.

**10.** Verfahren nach einem der voranstehenden Ansprüche, worin die Aminolyse unter Eintrag von Mikrowellenenergie durchgeführt wird.

**11.** Verfahren zum Auf- und Abbau eines phenolharzhaltigen Materials, **dadurch gekennzeichnet, dass** das phenolharzhaltige Material durch Härtung der Ausgangskomponenten bei einer Temperatur von unter 140°C erzeugt wird und zum Zwecke des Abbaus einer Aminolyse mit einem mindestens eine Aminogruppe enthaltenden Reagenz nach einem der Ansprüche 1 bis 5 unterworfen wird.

**12.** Verfahren zum Auf- und Abbau eines phenolharzhaltigen Materials in Form eines Novolaks, **dadurch gekennzeichnet, dass**

(i)

(a) das phenolharzhaltige Material durch Härtung der Ausgangskomponenten bei einer Temperatur von unter 180°C erzeugt wird, und/oder
(b) das phenolharzhaltige Material unter Verwendung mindestens eines Triglycerids oder Triglycerid-Gemischs als Modifikationsmittel hergestellt wurde, und/oder
(c) die Menge an zum Härten vorgesehener Aminoverbindung bei > 6 Ma-% liegt, und

(ii) das Harz zum Zwecke des Abbaus einer Aminolyse mit einem mindestens eine Aminogruppe enthaltenden Reagenz wie in einem der Ansprüche 1 bis 5 definiert unterworfen wird.

**13.** Verfahren zum Wiederverwerten eines phenolharzhaltigen Materials, umfassend

- das Abbauen des Materials wie in einem der Ansprüche 1 bis 10 definiert, wobei eine Flüssigkeit und ggf. im festen Zustand verbliebene Komponenten entstehen,
- im Falle im festen Zustand verbliebener Komponenten das Trennen dieser Komponenten von der Flüssigkeit,
- das Behandeln der Flüssigkeit zur Entfernung von flüchtigen Produkten unter Ausbildung eines nichtflüchtigen Rückstands,
- das Vermischen des nichtflüchtigen Rückstands mit für eine Phenolharzsynthese erforderlichen Ausgangsmaterialien oder mit einer oder mehreren Verbindungen, ausgewählt unter Monomeren, Oligomeren oder Polymeren, die mindestens zwei funktionelle Gruppen aufweisen, welche mit Aminogruppen und/oder Hydroxygruppen reagieren, wobei die Verbindung(en) vorzugsweise ausgewählt ist/sind unter Isocyanaten, aktivierten (Meth-)Acrylsäureverbindungen, Cyanaten und Epoxidharzen.

## Claims

**1.** A method for degrading a phenolic resin-containing material, **characterised in that** the phenolic resin-containing material is subjected to aminolysis with a reagent containing at least one amino group.

**2.** The method according to claim 1, **characterised in that** the reagent containing at least one amino group is ammonia, an aliphatic or aromatic amine or hydrazine, which may have further functional groups, or consists of a mixture of two or more of the said reagents.

**3.** The method according to claim 1 or 2, **characterised in that** the reagent containing at least one amino group is selected from the group of compounds comprising aliphatic primary amines, aromatic amines, aminoalcohols and diamines, wherein the reagent comprises one, two or more of these compounds.

**4.** The method according to one of the preceding claims, **characterised in that** the reagent containing the at least one amino group is used as a solvent without pressure or under pressure in a condensed state or after melting at elevated temperature.

**5.** The method according to one of claims 1 to 3, **characterised in that** the aminolysis is carried out in a solvent.

**6.** The method according to any one of the preceding claims, wherein the phenolic resin of the phenolic resin-containing material is a resol.

**7.** The method according to any one of claims 1 to 5, wherein the phenolic resin of the phenolic resin-containing material is a novolak with dimethylene amino bridges, the proportion of dimethylene amino bridges corresponding to a nitrogen content of the phenolic resin in the material of at least 1.2 mass%.

**8.** The method according to any one of claims 1 to 5, wherein the phenolic resin is a novolak prepared using at least one triglyceride or triglyceride mixture as an additional component.

**9.** The method according to one of the preceding claims, wherein the phenolic resin-containing material is a phenolic resin-based fibre composite plastic and the fibre composite, optionally with remaining phenolic resin residues thereon, is separated from the reagent containing the at least one amino group after aminolysis has taken place and optionally reused.

**10.** The method according to one of the preceding claims, wherein the aminolysis is carried out with the introduction of microwave energy.

**11.** The method for the decomposition and degradation of a phenolic resin-containing material, **characterised in that** the phenolic resin-containing material is produced by curing the starting components at a temperature of below 140°C and, for the purpose of degradation, is subjected to aminolysis with a reagent containing at least one amino group according to one of claims 1 to 5.

**12.** The method for the preparation and degradation of a phenolic resin-containing material in the form of a novolak, **characterised in that**

(i)

(a) the phenolic resin-containing material is produced by curing the starting components at a temperature below 180°C, and/or
(b) the phenolic resin-containing material has been prepared using at least one triglyceride or triglyceride mixture as modifier, and/or
(c) the amount of amino compound intended for curing is > 6 mass%, and

(ii) subjecting the resin to aminolysis with a reagent containing at least one amino group as defined in any one of claims 1 to 5 for the purpose of degradation.

**13.** A method for recycling a phenolic resin-containing material, comprising

- degrading the material as defined in any one of claims 1 to 10, thereby producing a liquid and any components remaining in the solid state,
- in the case of components remaining in the solid state, separating these components from the liquid,
- treating the liquid to remove volatile products to form a non-volatile product,
- mixing the non-volatile residue with starting materials required for a phenolic resin synthesis or with one or more compounds selected from monomers, oligomers or polymers which have at least two functional groups which react with amino groups and/or hydroxyl groups, the compound(s) preferably being selected from isocyanates, activated (meth)acrylic acid compounds, cyanates and epoxy resins.

## Revendications

**1.** Procédé destiné à dégrader une matière contenant de la résine phénolique, **caractérisé en ce que** la matière contenant de la résine phénolique est soumise à une aminolyse avec un réactif contenant au moins un groupe amino.

**2.** Procédé selon la revendication 1, **caractérisé en ce que** le réactif contenant au moins un groupe amino est de l’ammoniaque, une amine ou hydrazine aliphatique ou aromatique, qui peut recevoir d’autres groupes fonctionnels, ou est composé d’un mélange de deux ou plusieurs desdits réactifs.

**3.** Procédé selon la revendication 1 ou 2, **caractérisé en ce que** le réactif contenant au moins un groupe amino est choisi dans le groupe de composés qui comprend des amines primaires aliphatiques, des amines aromatiques, des aminoalcools et des diamines, le réactif présentant un, deux ou plusieurs de ces composés.

**4.** Procédé selon une des revendications précédentes, **caractérisé en ce que** le réactif contenant au moins un groupe amino est utilisé en tant que solvant sans pression ou sous pression à l'état condensé ou après fusion à haute température.

**5.** Procédé selon une des revendications 1 à 3, **caractérisé en ce que** l'aminolyse est réalisée dans un solvant.

**6.** Procédé selon une des revendications précédentes, dans lequel la résine phénolique de la matière contenant de la résine phénolique est un résol.

**7.** Procédé selon une des revendications 1 à 5, dans lequel la résine phénolique de la matière contenant de la résine phénolique est une novolaque avec des ponts diméthylamino, la part de ponts diméthylamino correspondant à une teneur en azote de la résine phénolique dans la matière d'au moins 1,2 % en masse.

**8.** Procédé selon une des revendications 1 à 5, dans lequel la résine phénolique est une novolaque qui est fabriquée en utilisant au moins un triglycéride ou un mélange de triglycérides en tant que composants supplémentaires.

**9.** Procédé selon une des revendications précédentes, dans lequel la matière contenant de la résine phénolique est une matière synthétique composite fibreuse à base de résine phénolique et la matière composite fibreuse, éventuellement avec des résidus de résine phénolique restant sur celle-ci, est séparée et en option réutilisée après réalisation de l'aminolyse par le réactif contenant l'au moins un groupe amino.

**10.** Procédé selon une des revendications précédentes, dans lequel l'aminolyse est réalisée sous apport d'une énergie micro-onde.

**11.** Procédé destiné à développer et dégrader une matière contenant de la résine phénolique, **caractérisé en ce que** la matière contenant de la résine phénolique est produite par durcissement des composants de départ à une température inférieure à 140°C et, aux fins d'une dégradation, est soumise à une aminolyse avec un réactif contenant au moins un groupe amino selon une des revendications 1 à 5.

**12.** Procédé de développement et de dégradation d'une matière contenant de la résine phénolique sous la forme d'une novolaque, **caractérisé en ce que**

(i)

(a) la matière contenant de la résine phénolique est produite par durcissement des composants de départ à une température inférieure à 180°C, et/ou
(b) la matière contenant de la résine phénolique est fabriquée en utilisant au moins un triglycéride ou un mélange de triglycérides en tant que moyen de modification, et/ou
(c) la quantité de composé aminé prévu pour le durcissement est > 6 % en masse, et

(ii) la résine aux fins de la dégradation est soumise à une aminolyse avec un réactif contenant au moins un groupe amino comme défini dans une des revendications 1 à 5.

**13.** Procédé destiné à recycler une matière contenant de la résine phénolique, comprenant

- la dégradation de la matière comme défini dans une des revendications 1 à 10, un liquide et éventuellement des composants restant à l'état solide en résultant,
- en cas de composants restant à l'état solide, la séparation de ces composants et du liquide,
- le traitement du liquide pour éliminer les produits volatils en formant un résidu non-volatil,
- le mélange du résidu non-volatil avec des matières de départ nécessaires à la synthèse de la résine phénolique ou avec un ou plusieurs composés, choisis parmi les monomères, les oligomères ou les polymères, qui présentent au moins deux groupes fonctionnels qui réagissent avec des groupes amino et/ou des groupes hydroxy, le(s) composé(s) étant de préférence choisis parmi les isocyanates, les composés d'acide (méth)acrylique activés, les cyanates et les résines époxy.

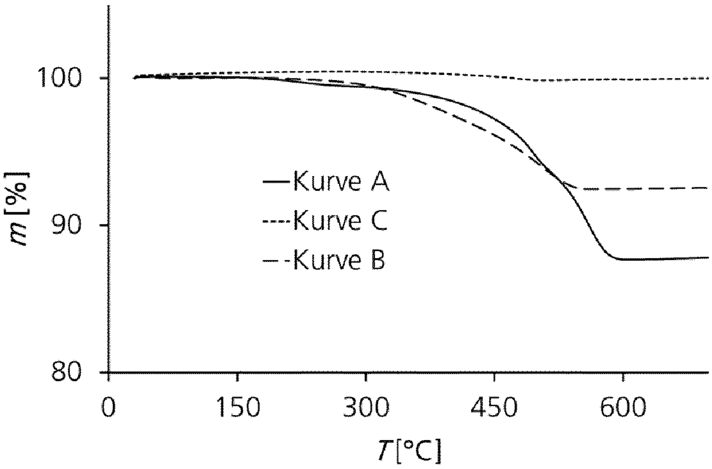


Figur 1

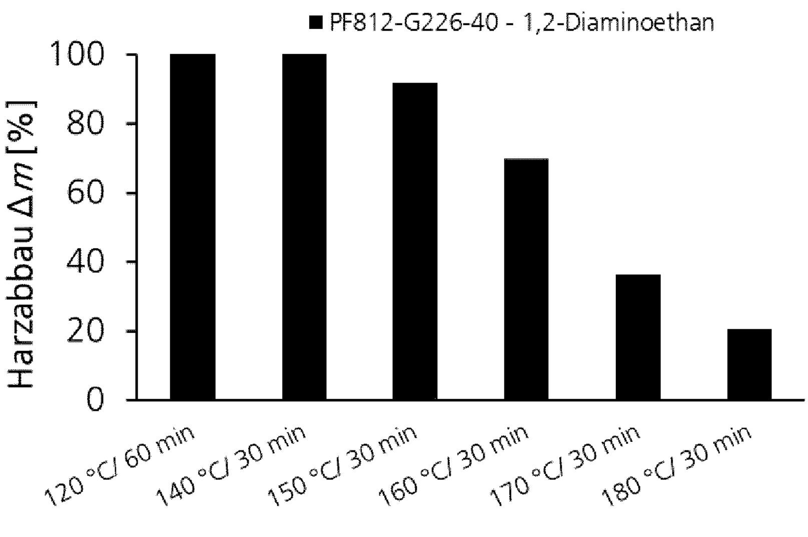


Figur 2

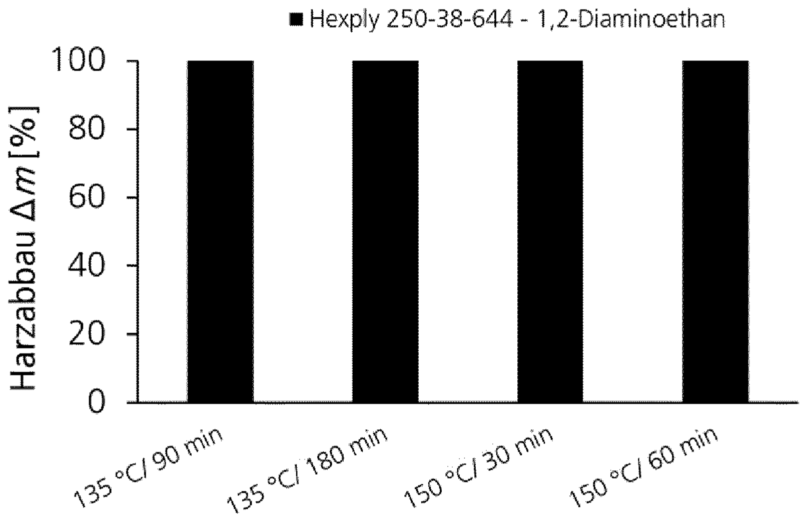


**Figur 3**

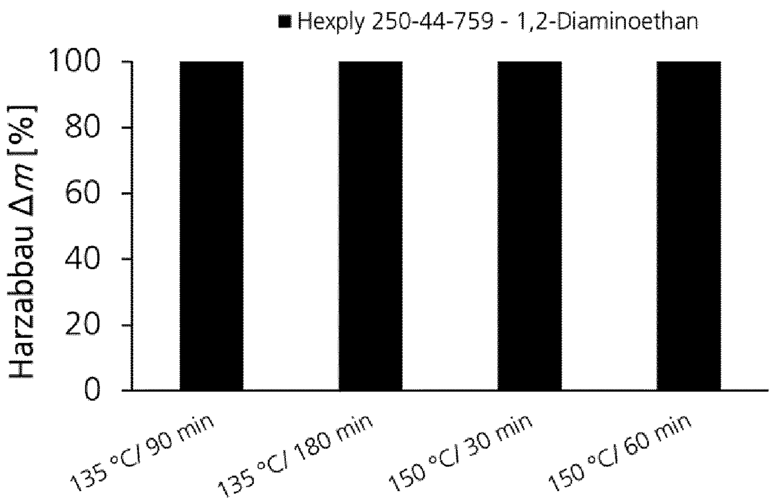


**Figur 4**

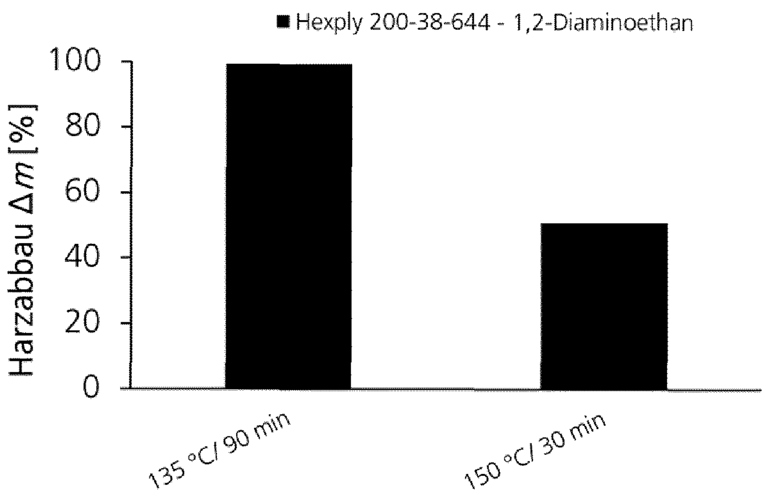


Figur 5

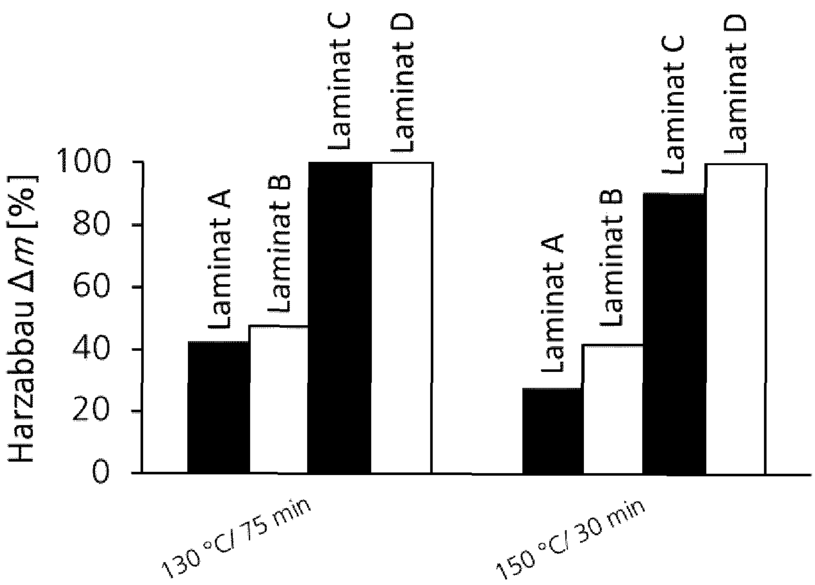


Figur 6

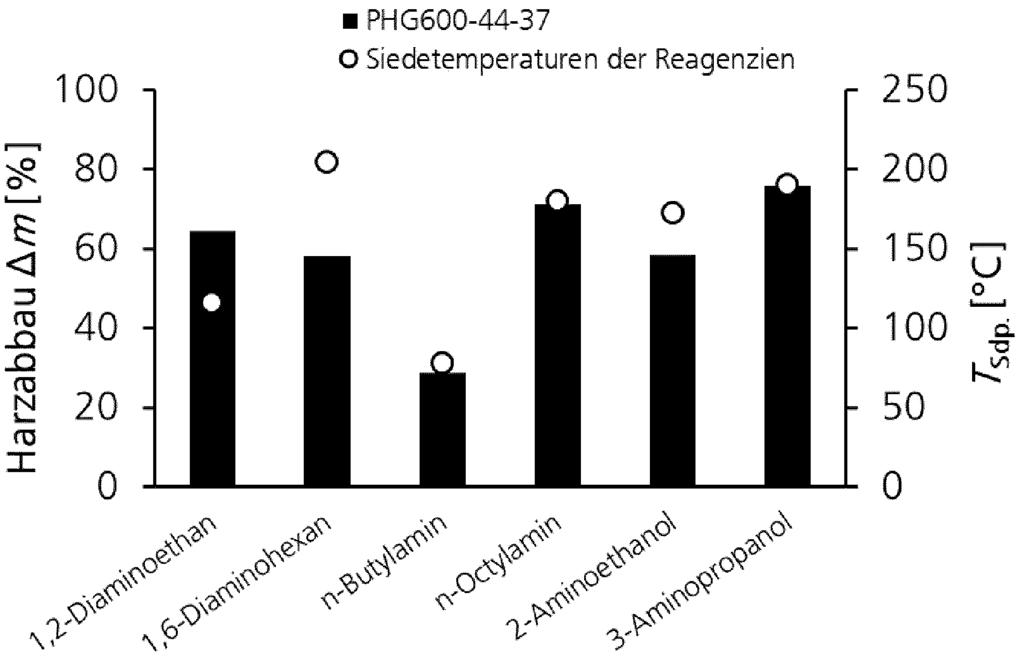


Figur 7

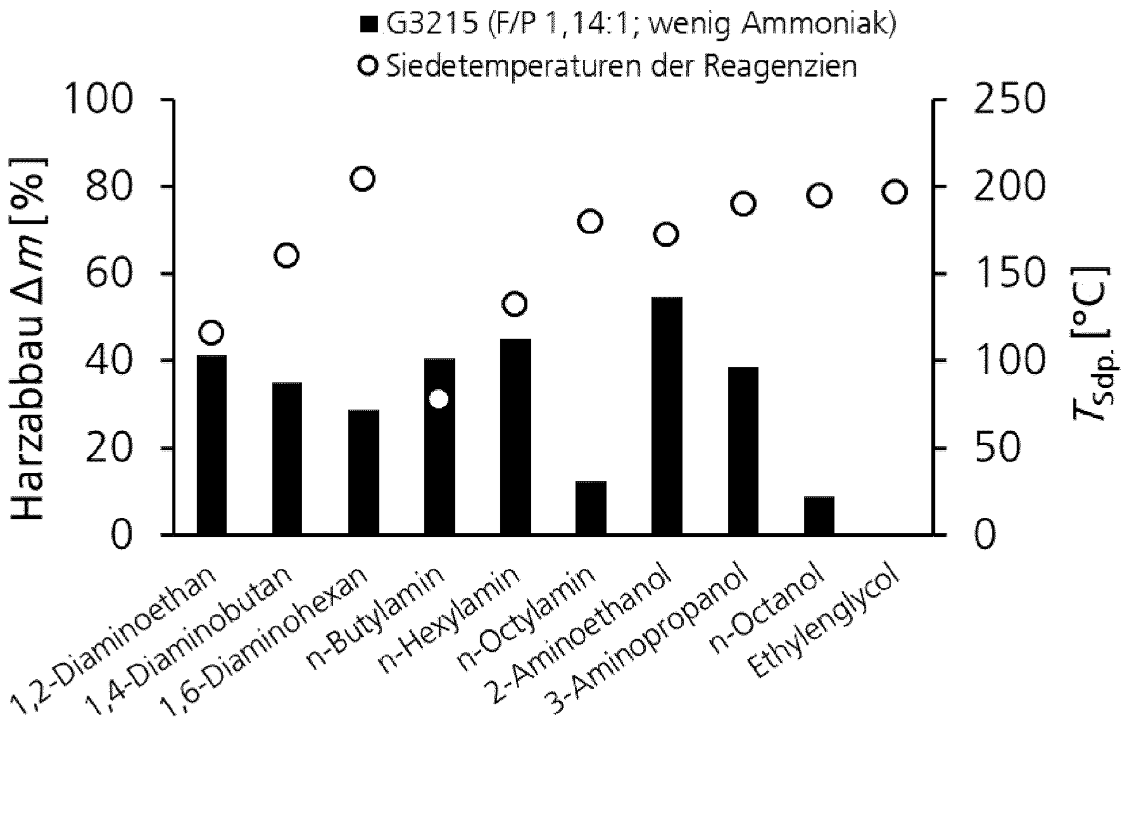


Figur 8

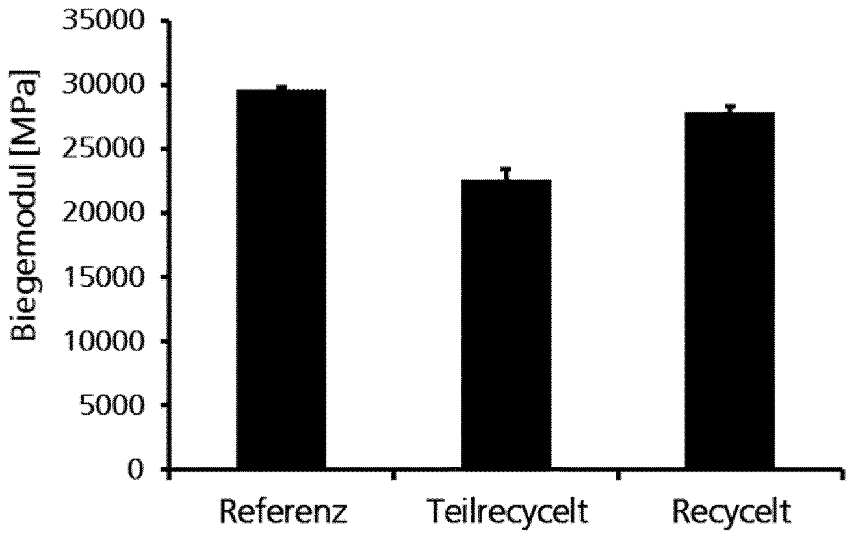


Figur 9

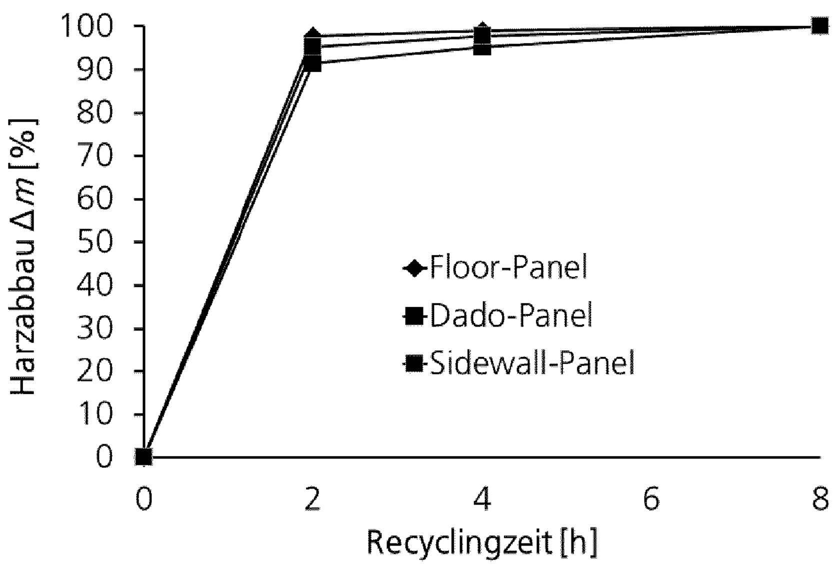


Figur 10

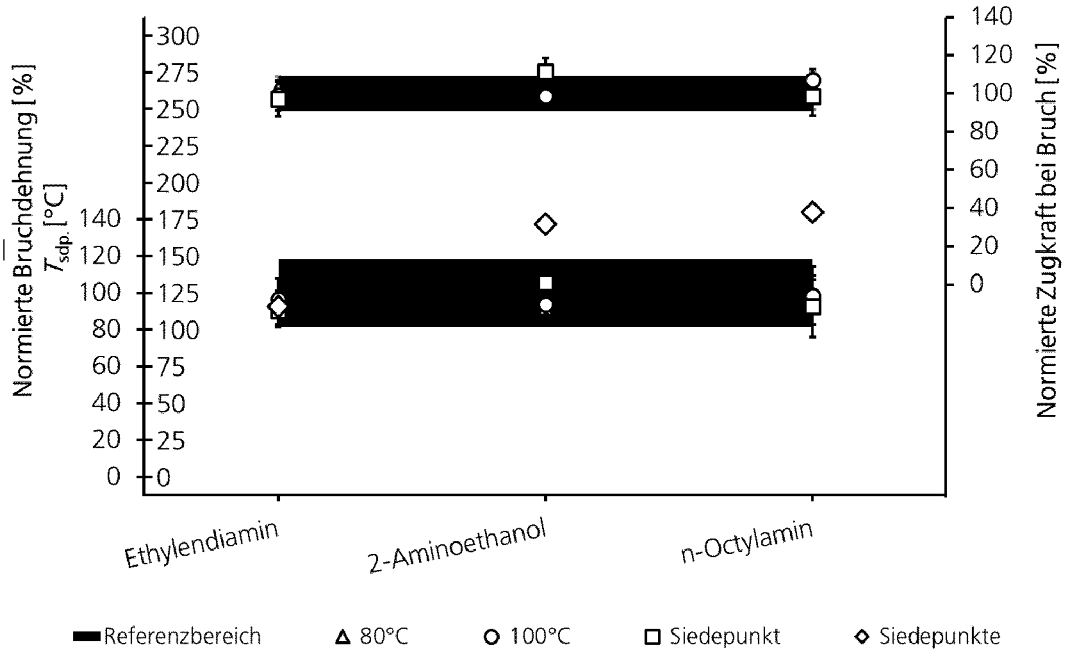


**Figur 11**

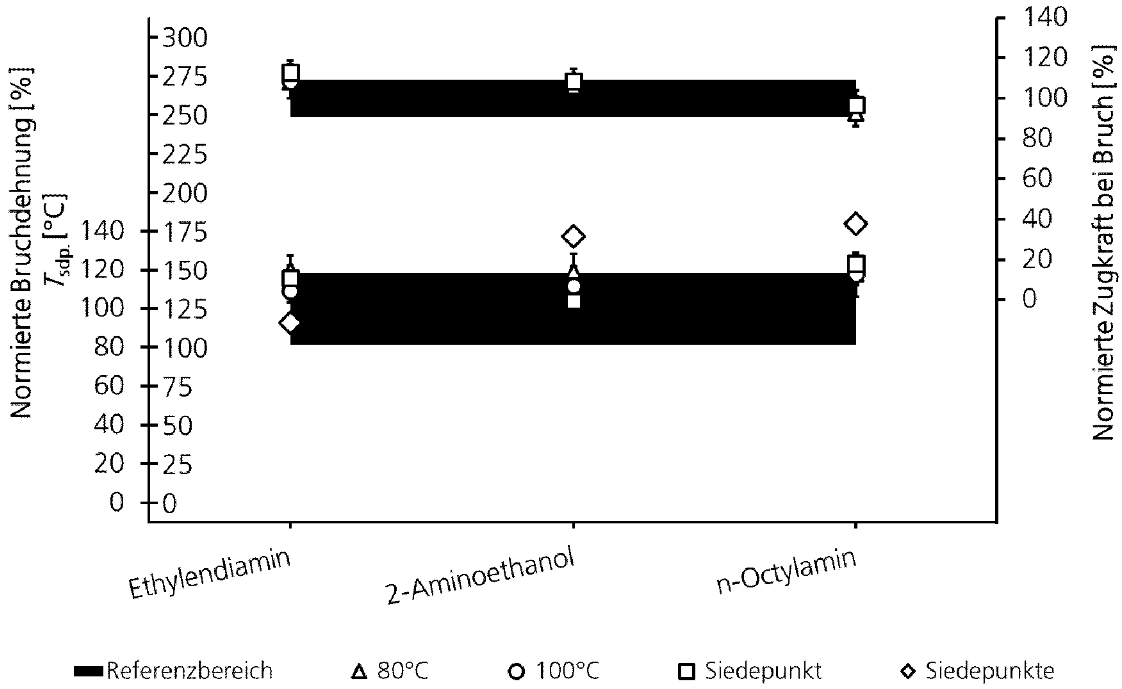


**Figur 12**

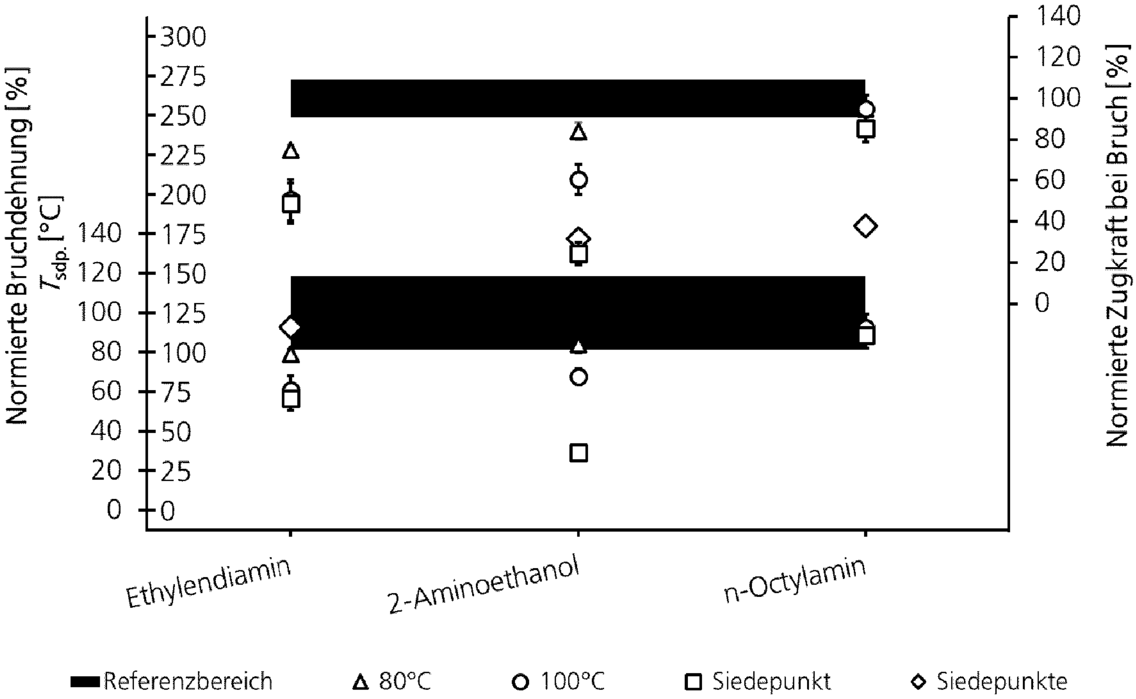


Figur 13

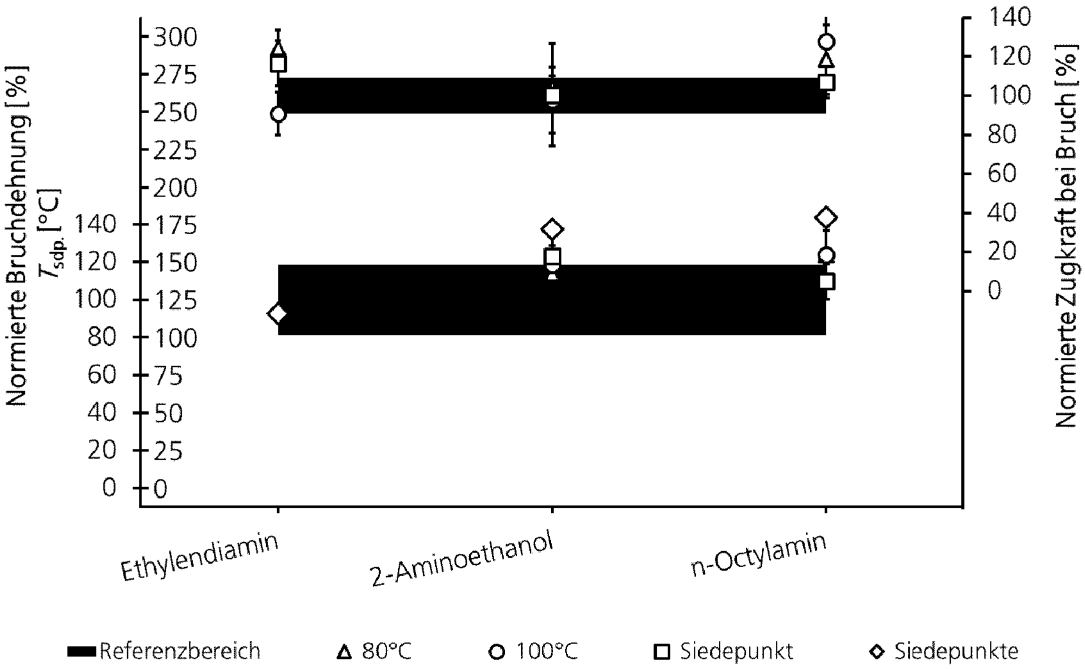


Figur 14

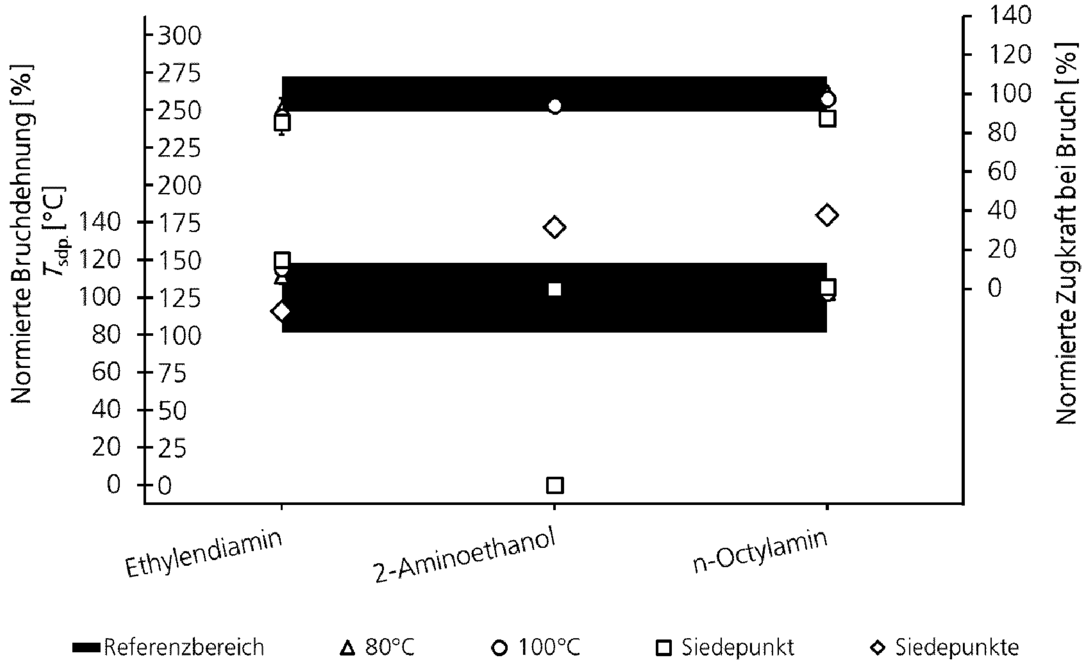


Figur 15

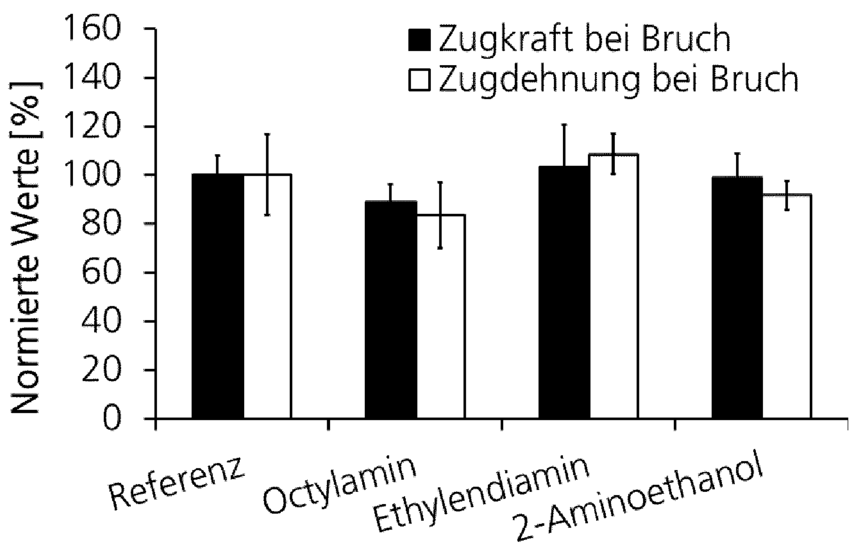


Figur 16

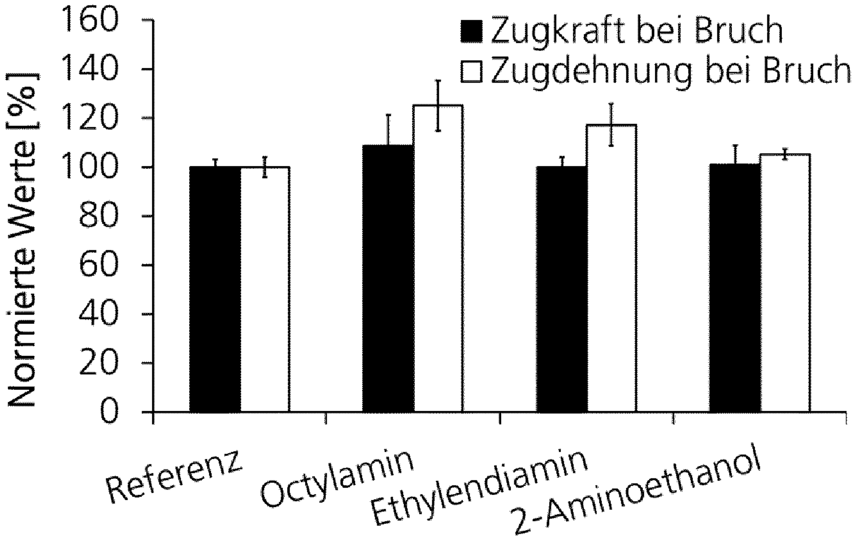


Figur 17

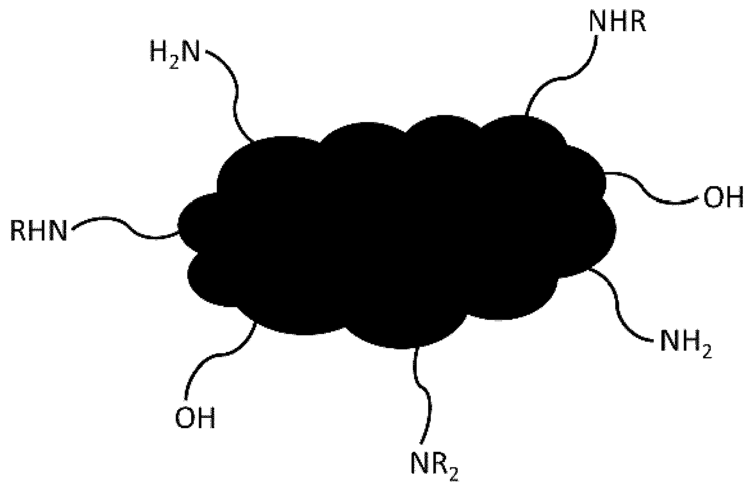


Figur 18

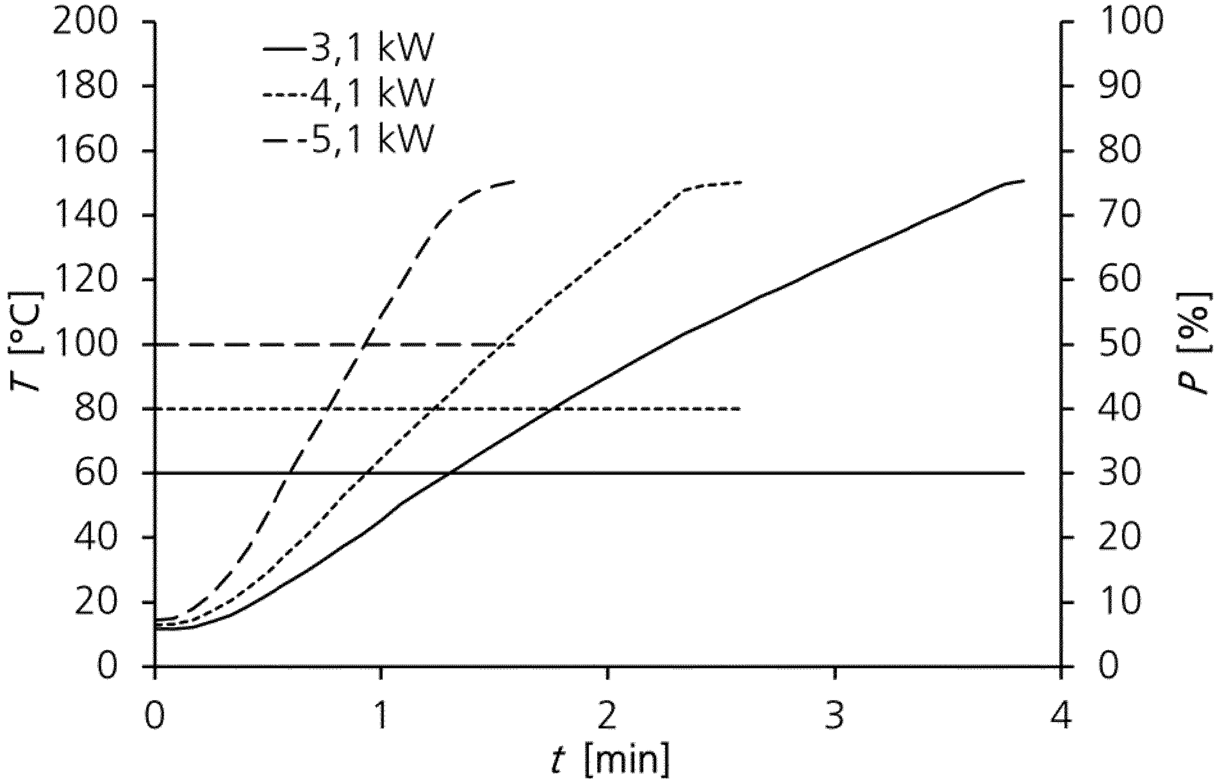
200
180
160
140
120
100
80
60
40
20
0
T [°C]
100
90
80
70
60
50
40
30
20
10
0
P [%]
0
1
2
3
4
t [min]
—3,1 kW
----4,1 kW
– -5,1 kW

Figur 19

* * *

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1107938 B1, Gentzkow


### In der Beschreibung aufgeführte Nicht-Patentliteratur


- **PILATO, L.** Phenolic Resins: A Century of Progress. Springer Verlag, 2010
- **OZAKI, J. ; DJAJA, S. K. I. ; OYA, A.** Chemical Recycling of Phenol Resin by Supercritical Methanol. *Industrial & Engineering Chemistry Research,* 2000, vol. 39, 245-249
- **TAGAYA, H. ; SUZUKI, Y. ; KOMURO, N. ; KADOKAWA, J.** Reactions of model compounds of phenol resin in sub- and supercritical water under an argon atmosphere. *Journal Material Cycles and Waste Management,* 2001, vol. 3 (1), 32-37
- *Journal of Materials Science,* 2006, vol. 41 (5), 1509-1515